(19) Europäisches Patentamt
European Patent Office
Office européen des brevets

(11) **EP 1 633 221 B1**

(12) **EUROPÄISCHE PATENTSCHRIFT**

(45) Veröffentlichungstag und Bekanntmachung des Hinweises auf die Patenterteilung:
**06.01.2010 Patentblatt 2010/01**

(21) Anmeldenummer: **04739901.9**

(22) Anmeldetag: **15.06.2004**

(51) Int Cl.:
**A47C 27/14** (2006.01)     **A47C 27/00** (2006.01)
**C08G 18/00** (2006.01)

(86) Internationale Anmeldenummer:
**PCT/EP2004/006431**

(87) Internationale Veröffentlichungsnummer:
**WO 2004/110219 (23.12.2004 Gazette 2004/52)**

(54) **POLSTER, INSBESONDERE ANTI-DEKUBITUS-MATRATZE**

CUSHION, PARTICULARLY AN ANTI-DECUBITUS MATTRESS

ELEMENT DE MATELASSAGE, NOTAMMENT MATELAS ANTI-ESCARRES

(84) Benannte Vertragsstaaten:
**AT BE BG CH CY CZ DE DK EE ES FI FR GB GR HU IE IT LI LU MC NL PL PT RO SE SI SK TR**

(30) Priorität: **17.06.2003  DE 10327258**

(43) Veröffentlichungstag der Anmeldung:
**15.03.2006  Patentblatt 2006/11**

(73) Patentinhaber: **Heckmann, Klaus, Prof. Dr.**
**D-93186 Pettendorf (DE)**

(72) Erfinder: **Heckmann, Klaus, Prof. Dr.**
**D-93186 Pettendorf (DE)**

(74) Vertreter: **Hannke, Christian et al**
**Hannke Bittner & Partner**
**Patent- und Rechtsanwalte**
**Ägidienplatz 7**
**93047 Regensburg (DE)**

(56) Entgegenhaltungen:
EP-A- 0 116 309     EP-A- 0 523 991
DE-A- 2 542 178     DE-A- 4 124 044
DE-A- 10 003 276    DE-A- 10 019 449
DE-A- 19 726 280    DE-A- 19 855 190
DE-B- 1 248 286     DE-U- 7 838 835
FR-A- 2 304 632     FR-A- 2 435 231
FR-A- 2 755 139     GB-A- 1 197 018
US-A- 3 885 257     US-A- 3 909 464
US-A- 4 862 538

- **PATENT ABSTRACTS OF JAPAN Bd. 0174, Nr. 78 (C-1104), 31. August 1993 (1993-08-31) & JP 5 117354 A (DAINIPPON INK & CHEM INC), 14. Mai 1993 (1993-05-14)**
- **BRASINGTON M R ET AL: "PROGRES DANS LA DURABILITE DES MOUSSES DE POLYURETHANE ET DANS LES METHODES DE TEST. APPLICATION AUX METALASSURES DE SIEGES AUTOMOBILES IMPROVED POLYURETHANE FOAM DURABILITY AND TEST METHODS. APPLICATION TO AUTOMOTIVE SEAT CUSHIONING" INGENIEURS DE L'AUTOMOBILE, RAIP. BOULOGNE, FR, Nr. 704, 1. April 1996 (1996-04-01), Seiten 65-72, XP000584285 ISSN: 0020-1200**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Polster, insbesondere eine Matratze, umfassend einen dauerelastischen Polsterkern, der ganz oder teilweise als Schaumstoffkern ausgebildet ist, und eine darauf befindliche abnehmbare Abdeckung, wobei die dem Benutzer zugewandte Seite des Polsterkerns nebeneinander liegende Schaumstoffsegmente aufweist, die im Wesentlichen unabhängig voneinander elastisch komprimierbar sind, und wobei die Abdeckung derart ausgebildet ist, dass sie den Schaumstoffsegmenten ihre im Wesentlichen unabhängige elastische Komprimierbarkeit belässt, indem sie bevorzugt elastisch, insbesondere hochelastisch, und/oder unterbrochen ausgeführt ist.

Insbesondere wird mit der Erfindung eine Anti-Dekubitus-Matratze zur Verfügung gestellt, die für die Dekubitus-Prophylaxe und die Dekubitus-Therapie optimiert ist.

Dekubitus, das Wundliegen von langzeit-immobilen Patienten, ist die Folge von mehreren verschiedenen, aber häufig gleichzeitig auftretenden Einwirkungen - also ein komplexes Phänomen. Einige seiner Ursachen lassen sich durch pflegerische Maßnahmen nicht beeinflussen, andere sehr wohl. Zu ersteren zählen z. B. Gewicht und Blutdruck, zu letzteren die Lagerung des Patienten - und insbesondere hiermit befasst sich die vorliegende Erfindung.

Dekubitus entsteht an besonders exponierten Körperteilen wie Hinterkopf, Gesäß und Fersen, weil dort die Blutversorgung des Gewebes infolge des relativ hohen Auflagedrucks systematisch gestört ist. Weitere Faktoren, die seine Entwicklung beschleunigen und verstärken, sind Scherkräfte, mangelnde Belüftung der Haut, Feuchtigkeit in Hautnähe und - natürlich - langfristige Immobilität. Alle Maßnahmen, die diese Faktoren abschwächen oder beseitigen, eignen sich zur Prophylaxe und zur Therapie des Dekubitus.

Da die schädlichen Einflüsse in aller Regel kumuliert auftreten, ist es sinnvoll, ihnen nach Möglichkeit auch mit kumulierten Maßnahmen zu begegnen. Es muss also gleichzeitig für die Beseitigung von permanenten Druckspitzen und von Scherkräften sowie für häufigen Druckwechsel und für trockenes und gut belüftetes Klima in Hautnähe gesorgt werden. So, wie der Dekubitus selbst ein komplexes Phänomen ist, stellt auch das Bündel der Gegenmaßnahmen einen Komplex dar, dessen Komponenten zwar tunlichst jeweils einzeln zu optimieren sind, die aber zusätzlich alle aufeinander abgestimmt werden sollten, weil sie letztlich alle miteinander ein Gesamtsystem darstellen, nämlich eine Anti-Dekubitus-Matratze.

Eine Matratze der eingangs genannten und im Oberbegriff des Anspruchs 1 angegebenen Art, die sich im Besonderen für die Dekubitus-Prophylaxe und die Dekubitus-Therapie eignet, ist aus der DE 41 24 044 C2 bekannt. Wenngleich diese bekannte Matratze drei, insbesondere für Matratzen im Klinikbereich, wichtige Anforderungen gleichzeitig und optimal erfüllt, nämlich Punkt- bzw. Segmentelastizität, atmungsaktive Abdeckung bzw. Polsterschicht sowie rationelle und bequeme Reinigungsmöglichkeit, und sich darüber hinaus preiswert anfertigen und in einer breiten Vielfalt von Ausführungsformen - von einfach und billig bis aufwändig und teuer - anbieten lässt und damit sowohl für den Einsatz in Kliniken als auch im privaten Bereich geeignet ist, ist eine Verbesserung derselben in einigen Aspekten dringend notwendig, insbesondere, was ihre Lebensdauer bei optimaler Erhaltung der Punkt- bzw. Segmentelastizität anbelangt. Das gilt vor allem für den Klinikbereich, in dem eine derartige Matratze - im Gegensatz zum privaten Bereich - Tag und Nacht praktisch ohne wesentliche Pausen benutzt wird. Aber auch für die übrigen Anwendungsbereiche von Matratzen und allgemeiner von Polstern der eingangs genannten Art ist eine signifikante Erhöhung der Lebensdauer seitens des Benutzers, aber auch seitens des Herstellers außerordentlich erwünscht.

Was nun im Einzelnen die effektive Lebensdauer von segmentelastischen Schaumstoff-Matratzenkernen anbelangt, so zeigt die Erfahrung, dass die Stauchhärte solcher Matratzenkerne aus handelsüblichen Schaumstoffen an besonders oft und stark belasteten Stellen auch besonders schnell nachlässt. Dieses gilt in besonders starkem Maße für Matratzenkerne, deren Segmente tailliert und deswegen in der Taille bis zu einem gewissen Grad kippbar und eben darum auch besonders anschmiegsam und wirksam sind. Die Ermüdung des Schaumstoffs äußert sich hier vor allem als Kuhlenbildung und schränkt die Bewegungsfreiheit des Benutzers, insbesondere eines Patienten, ein. Sie kann zu massiven Rückenproblemen führen, wenn der Matratze ein häufiger Personenwechsel zugemutet wird - wie z. B. im Klinikbetrieb. Die Ermüdung ist selbst dann unangenehm, wenn die Matratze längerfristig nur von ein- und derselben Person benutzt wird. Eine ermüdete und damit "durchgelegene" Matratze ist unbrauchbar.

Je nach Schaumstoffqualität und -belastung und je nach Segmentprofil macht sich die Ermüdung früher oder später bemerkbar. Es gibt segmentierte Matratzen, wie z. B. die aus dem Handel bekannten Ausführungsformen nach der DE 41 24 044 C2, bei denen man die durch die Ermüdung bewirkte Erschlaffung schon nach rund einem halben Jahr beobachten kann. In diesen Fällen ist also nicht einmal die gesetzlich vorgeschriebene Garantiefrist eingehalten.

Segmentierte Schaumstoff-Matratzenkerne werden auf drei Weisen hergestellt:

(1) In Spezialfällen schneidet man aus einem Schaumstoffblock zahlreiche isolierte Einzelsegmente heraus, die sich nachher durch Einfügen in ein Netz oder eine Zarge oder anderweitig wieder zu einem vollständigen segmentierten Matratzenkern zusammensetzen lassen. Diese Art der Herstellung ist relativ aufwendig und teuer. Ist ein Matratzenkern aus solchen isolierten Einzelsegmenten zusammengesetzt, so ist die Schaumstoffermüdung im Prinzip kein ernsthaftes Problem. Man wechselt einfach stark belastete Schaumstoffsegmente systematisch gegen weniger belastete oder gegen neue Schaumstoffsegmente aus. Die Lebensdauer der Gesamtmatratze bleibt auf diese Weise oberhalb der gesetzlichen Garantiezeit und darum erscheint der hohe Anschaffungspreis gerechtfertigt. Allerdings setzt das Auswechseln der Schaumstoffsegmente untereinander voraus, dass ein erkennbar-übersichtliches Austausch-Ordnungssystem strikt eingehalten wird. Es ist aber unwahrscheinlich, dass sich ein solches System in der Klinikpraxis durchsetzen lässt. Auch kann der Austausch ermüdeter Segmente gegen fabrikneue Segmente die Erzeugung ungewollter lokaler Stauchhärte-Maxima oder -Minima zur Folge haben, denn die Toleranzgrenzen für Raumgewichte und Stauchhärten von technischen Schaumstoffen betragen bis zu 20%.

(2) Eine zweite Methode wird in der DE 41 24 044 C2 beschrieben. Sie basiert auf dem Federkern-Prinzip. Der Matratzenkern besteht aus Packungen von Spiralfedern, welche in ihrem oberen Bereich mechanisch soweit entkoppelt sind, dass man sie dort einzeln vertikal komprimieren kann. Allerdings ist die Idee nicht konsequent durchdacht und so bleibt speziell das Problem der Aufbringung einer atmungsaktiven Polsterschicht auf die Federkonstruktion ungelöst, denn in der DE 41 24 044 C2 ist bezüglich der atmungsaktiven Polsterschicht nur angegeben, dass sie oben auf die Spiralfedern aufgebracht wird.

(3) In der Regel werden aber segmentierte Schaumstoff-Matratzenkerne so hergestellt, dass man in die Oberflächen bzw. den oberen Querschnittsbereich von Polyurethan-Schaumstoffblöcken mehr oder weniger tiefe Nuten einschneidet oder dass man genutete Latexschaumstoffblöcke gießt. Eine solche Nutung ist ein einfacher Prozess und ein auf diese Weise gefertigter Matratzenkern ist deshalb relativ preiswert.
Jedoch muss ein solcher nur "oberflächlich" genuteter Schaumstoffkern bei hinreichend fortgeschrittener lokaler Ermüdung vollständig ausgetauscht werden. Der relativ niedrige Anschaffungspreis zahlt sich folglich längerfristig nicht aus.

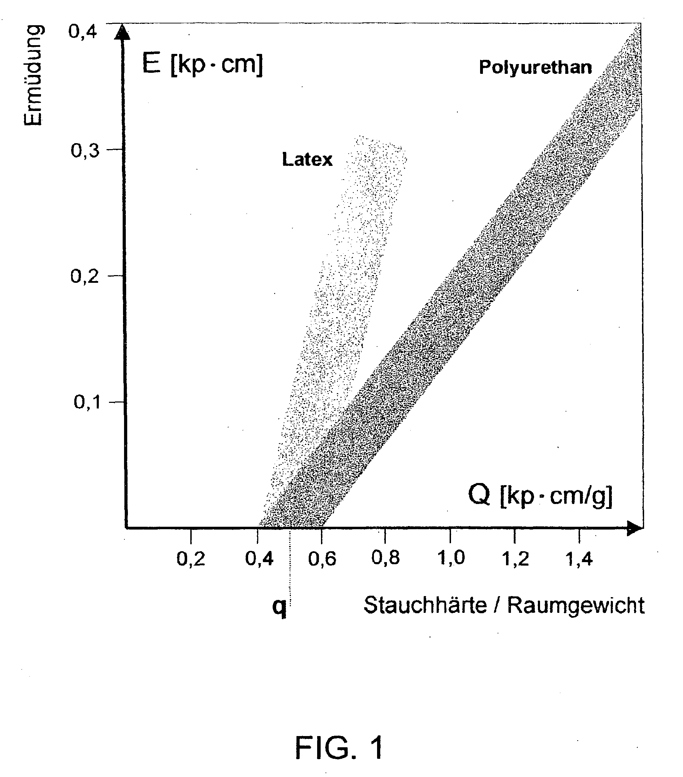

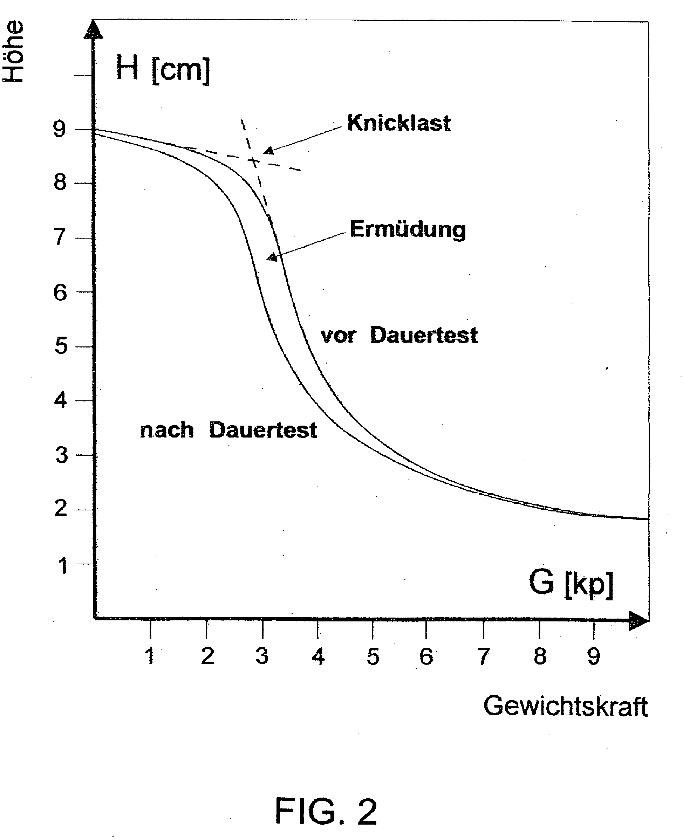

Insgesamt ist es daher so, dass das Problem der langzeit-stabilen Elastizität segmentierter Schaumstoff-Matratzen unabhängig vom Konstruktionsprinzip und vom Herstellungsverfahren nur unbefriedigend gelöst ist.
Zwar war es für die Schaumstoff-Hersteller bisher wenig attraktiv, Schaumstoff-Matratzenkerne mit langzeitstabiler Elastizität zu produzieren, da das den Umsatz eingeschränkt hätte. Jedoch wird sich angesichts des wachsenden Bevölkerungsanteils alter und pflegebedürftiger Menschen und im Hinblick auf die daraus folgenden neuen Konzepte für die Pflegepraxis und für die Matratzenkonstruktionen diese Denkweise grundlegend ändern müssen - zumindest für medizinische und therapeutische Einsatzbereiche von Matratzen und anderen gepolsterten Unterlagen. So sind speziell Kliniken und Altenheime zunehmend gezwungen, ihre Kosten besonders genau zu kalkulieren. Es wird auch schon erwogen, Krankenhäuser für dort entstandenen Dekubitus regresspflichtig zu machen. Daraus ergibt sich die Frage, ob sich ein vergleichsweise niedriger Beschaffungspreis eines segmentierten Schaumstoffkernes mit langer Lebensdauer verbinden lässt.
Aufgrund von Untersuchungen, die im Rahmen der vorliegenden Erfindung durchgeführt wurden und die weiter unten anhand der Figuren 1 und 2 näher erläutert sind, wurde in völlig überraschender Weise gefunden, dass es bei den hier besonders interessierenden Polyurethan- und Latexschaumstoffen einen kritischen Wert q des Verhältnisses Q von Stauchhärte S zu Raumgewicht R gibt, bei dessen Erreichen und Unterschreiten unter den Bedingungen eines Dauertests, der den Beanspruchungen solcher Schaumstoffe während einer akzeptablen Lebensdauer entspricht, keine Ermüdung E der Schaumstoffe messbar ist. Das bedeutet, dass sich diese Schaumstoffe bei Q-Werten, die ≤ q sind, im vorgenannten Dauertest überraschenderweise ideal-elastisch verhalten und darüber hinaus auch in der Nähe dieses q-Werts nur einen so geringen Wert der Ermüdung E zeigen, dass sich hier eine ausreichend lange Lebensdauer eines daraus hergestellten segmentierten Schaumstoffpolsters, insbesondere einer segmentierten Schaumstoffmatratze, ergibt.
Mit der Erfindung wird aufgrund dieses im höchsten Maße überraschenden Ergebnisses daher ein Polster, insbesondere eine Matratze, der eingangs genannten Art zur Verfügung gestellt, das bzw. die - was die Ermüdung des Schaumstoffs anbelangt - eine den Forderungen der Praxis entsprechende, außerordentlich hohe Lebensdauer besitzt und sich erfindungsgemäß dadurch auszeichnet, dass der Wert der Ermüdung E von allen Schaumstoffsegmenten oder zumindest von denjenigen Schaumstoffsegmenten, die durch den Benutzer am stärksten belastet werden, nach einem Dauertest ≤ 0,1 kp·cm ist und vorzugsweise gleichzeitig die Stauchhärten dieser Schaumstoffe > 20 hPa (Hektopascal) sind, wobei

(a) der Dauertest ausgeführt wird durch periodische Druckbelastung eines kubischen Prüfkörpers mittels eines Druckstempels mit 120.000 Kompressionszyklen und mit einer Kompressionsfrequenz von 1,5 Hz sowie mit einer jeweiligen 40%-igen Volumenkompression, und

(b) der Wert der Ermüdung sich darstellt als die Flächendifferenz zwischen einer vor und einer nach dem Dauertest statisch gemessenen Federkennlinie des Schaumstoffs.

Vorzugsweise ist der genannte Wert der Ermüdung E ≤ 0,08 kp·cm, besonders bevorzugt ≤ 0,065 kp·cm, noch mehr bevorzugt ≤ 0,05 kp·cm und am meisten bevorzugt Null oder nahezu Null, d. h. ≤ 0,01 kp·cm.

Weiter ist der genannte Wert der Stauchhärten bevorzugt ≥ 30 hPa, mehr bevorzugt ≥ 35 hPa, und am meisten bevorzugt ≥ 40 hPa.

Da die obigen Bedingungen des erforderlichen Dauertests - wie schon bemerkt - einer praxisgerechten Lebensdauer unabhängig von dem verwendeten Schaumstoffmaterial entsprechen und der Wert der Ermüdung als Flächendifferenz zwischen einer vor und einer nach dem Dauertest statisch gemessenen Federkennlinie des Schaumstoffs ebenfalls unabhängig von dem jeweils verwendeten Schaumstoffmaterial gemessen werden kann, gelten die vorstehenden Bedingungen nicht nur für Polyurethan- und Latex-Schaumstoffe, sondern auch für andere Schaumstoffe.

Vorzugsweise sind alle Schaumstoffsegmente oder zumindest diejenigen Schaumstoffsegmente, die dem vom Benutzer am stärksten belasteten Bereich des Polsterkerns entsprechen, aus Polyurethan- oder Latexschaumstoff hergestellt, wobei bevorzugt der Quotient Q aus der Stauchhärte S und dem Raumgewicht R des Polyurethan-Schaumstoffs einen Wert im Bereich ≤ 1,0 kp·cm/g, vorzugsweise im Bereich ≤ 0,8 kp·cm/g und besonders bevorzugt im Bereich ≤ 0,6 kp•cm/g besitzt, und wobei der Quotient Q für Latex-Schaumstoff bevorzugt im Bereich ≤ 0,7 kg•cm/g liegt. Bei den durchgeführten Versuchen war der Quotient Q jeweils ≥ 0,4 kp•cm/g, so dass dies eine bevorzugte Untergrenze für die jeweils angegebenen Bereiche ist, ohne dass die Erfindung hierauf beschränkt ist.

Um die Polsterungseigenschaften insbesondere auf die unterschiedlichen lokalen Belastungen eines Polsters bzw. einer Matratze durch den Benutzer abzustimmen, können erfindungsgemäß die Schaumstoffsegmente in zwei oder mehr Schaumstoffsegmentgruppen zusammengefasst sein, die sich durch das Raumgewicht R und/oder die Stauchhärte S des Schaumstoffs voneinander unterscheiden.

Bevorzugt ist das Polster, insbesondere eine Matratze, nach der Erfindung so aufgebaut, dass die Schaumstoffsegmente auf und/oder in eine Halterung (a) als separate Segmente oder (b) als separate Gruppen von jeweils mehreren zusammenhängenden Segmenten oder (c) als eine Kombination von separaten Segmenten und einer oder mehreren Gruppen von zusammenhängenden Segmenten oder (d) als insgesamt zusammenhängende Segmente reversibel aufgebracht und/oder eingefügt sind, wobei die Halterung vorzugsweise eine Bodenplatte oder eine Bodenkonstruktion mit oder ohne Zarge ist und wobei die Bodenplatte und/oder die Zarge bevorzugt ganz oder teilweise aus einem billigeren Schaumstoff als die Schaumstoffsegmente bestehen, d. h. einem hinsichtlich der Ermüdung nicht so kritischen, relativ leichten Schaumstoff.

Da der Luftanteil, und somit die Atmungsaktivität, bei schweren Schaumstoffen, wie sie für eine völlige oder weitgehende Ermüdungsfreiheit notwendig sind, niedriger sind als bei leichten, ist es besonders wichtig, diesen geringeren Luftanteil so vollständig wie möglich in die Atmungsaktivität des Schaumstoffs einzubeziehen und zu diesem Zweck alle möglicherweise noch geschlossenen Schaumstoffzellen zu sprengen. Daher sind vorliegend bevorzugt die Schaumstoffsegmente aus offenzelligem, vorzugsweise retikuliertem Schaumstoff hergestellt. Eine solche Retikulierung lässt sich, insbesondere bei Polyurethan-Schaumstoffen, besonders einfach als Knallgas-Retikulierung bewerkstelligen.

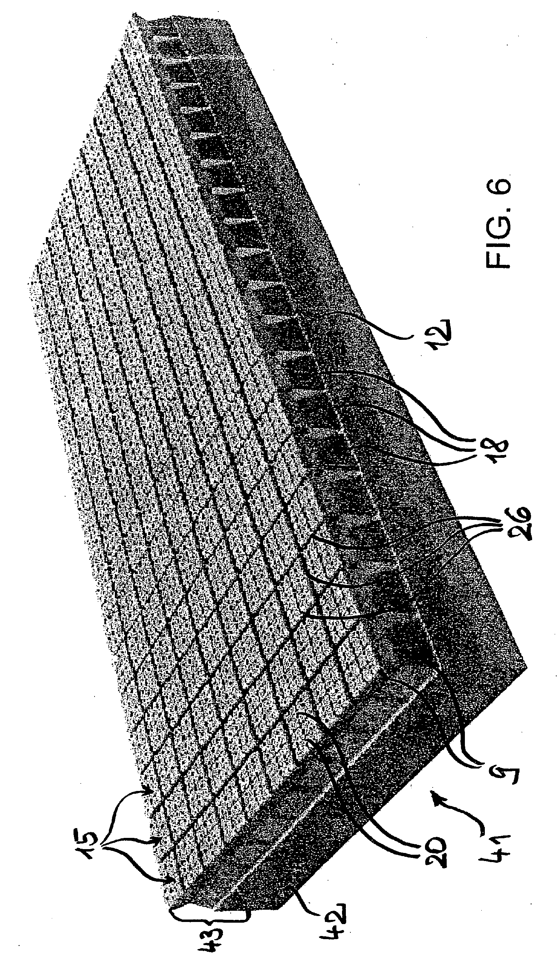

Was die Form der Schaumstoffsegmente anbelangt, so kann das Polster, insbesondere die Matratze, gemäß der Erfindung so ausgebildet sein, dass die Grundstruktur der Schaumstoffsegmente bevorzugt quaderförmig, insbesondere würfelförmig, oder pyramidenstumpfförmig oder prismatisch oder zylindrisch ist, wobei im Fall einer pyramidenstumpfförmigen Ausbildung vorzugsweise die - größere - Grundfläche des Pyramidenstumpfs vom Benutzer abgewandt und gegebenenfalls einstückig mit einer Schaumstoffplatte ist, auf der sich die Schaumstoffsegmente befinden bzw. aus deren oberem Querschnittsbereich die Schaumstoffsegmente durch Nutung herausgearbeitet sind (siehe z. B. die unten erläuterte Figur 6).

Auch wenn weiter oben und nachstehend bevorzugte Ausbildungen der Erfindung, beispielsweise von Schaumstoffsegmentformen, unter Bezugnahme auf ihre Vorteile bei Anti-Dekubitus-Matratzen beschrieben sind, so sind diese Ausbildungen doch auch für andere Matratzen bzw. Polster, insbesondere im Heimbereich oder im privaten Bereich, von Bedeutung, da sie deren Komfort und/oder Handhabung sowie andere Eigenschaften signifikant verbessern. Denn an die Anti-Dekubitus-Matratzen werden gewissermaßen die höchsten Anforderungen gestellt, deren Erfüllung sich bei anderen Matratzen bzw. Polstern im Sinne von mehr Komfort, z. B. höherem Liegekomfort etc., vor allem bei den technisch ausgeklügelteren Ausführungsformen solcher Matratzen bzw. Polster auswirkt.

An jede Anti-Dekubitus-Matratze ist die Forderung zu stellen, dass der Auflagedruck des Patienten auf eine möglichst große Fläche verteilt wird, d. h. eine breite Druckverteilung vorliegt. Diese Forderung wird durch die obige Segmentierung erfüllt, durch die die Matratze bzw. das Polster oder ihre bzw. seine Oberfläche in zahlreiche, einzeln komprimierbare Elemente unterteilt ist. Die elastische Querspannung zwischen je zwei benachbarten Segmenten sollte tunlichst gleich Null sein. Ein solches Polster bzw. eine solche Matratze heißt dann "punktelastisch" oder, besser, "segmentelastisch". Eine segmentelastische Polster- bzw. Matratzenoberfläche schmiegt sich den Konturen des aufliegenden Körpers umso genauer an, je feiner sie in Segmente unterteilt ist.

Die genannten Grundstrukturen von bisherigen Schaumstoffsegmenten sind auf ihrer Oberseite im Allgemeinen eben, d. h. nicht noch weitergehend segmentiert oder anderweitig unterteilt. Die Beweglichkeit dieser Segmente beschränkt sich vorwiegend auf vertikale Komprimierbarkeit und auf seitliches Ausweichen bei schräger Belastung. Solche Segmente verbreitern bzw. verfeinern zwar alle die Druckverteilung; ihre Verbesserung ist jedoch in mehrfacher Hinsicht wünschenswert:

(a) Häufig sind die konventionellen Schaumstoffe, aus denen diese Segmente gefertigt sind, relativ weich: Ihre Stauchhärten haben - gemessen in konventionellem Maß - Werte von ≤ 3 kPa bzw. ≤ 30 hPa. Gemessen im hier verwendeten Maß sind das ≤ 3 kp/100 cm$^2$, was eine Weichlagerung bedeutet. Die Weichlagerung eines Patienten fördert aber dessen Immobilität - vorwiegend deswegen, weil er dadurch sein Körperbewusstsein, sein "Körperschema" verliert.

(b) Darüber hinaus erschweren die senkrechten oder nur schwach geneigten Flanken dieser Segmente spontane Drehbewegungen. Der Körper, speziell die Wirbelsäule, erfährt bei der Rotation keine nennenswerte Unterstützung "von unten" oder "von schräg unten". Daraus folgt dann die Notwendigkeit zu häufigerer Hautpflege und zum häufigeren Umlagern des Patienten. Es sei diesbezüglich angemerkt, dass die Tatsache, wonach sich die begrenzte Beweglichkeit der Segmente negativ auf die Mobilität der Patienten auswirken kann, im Rahmen der vorliegenden Erfindung entdeckt wurde, nachdem neue und anders profilierte Segmente untersucht wurden und sich somit erstmals Vergleiche zwischen alten und neuen Segmenten anstellen ließen.

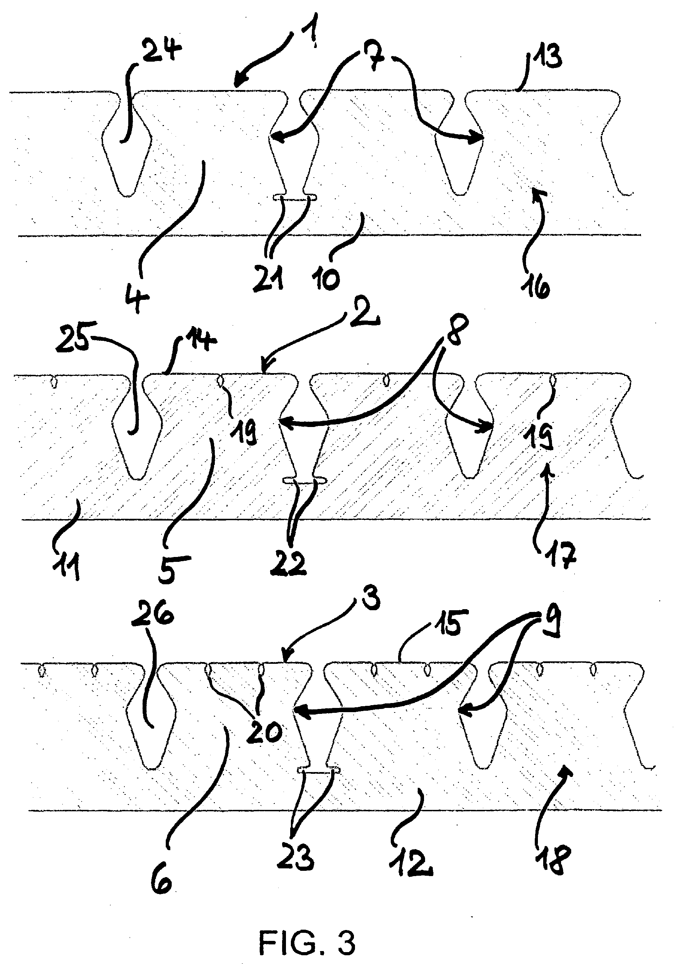

Die gemäß der vorliegenden Erfindung bevorzugt verwendeten Schaumstoffsegmente sind zur Lösung der vorstehenden Problematik, was den obigen Punkt (a) anbelangt, aus den erfindungsgemäß vorgesehenen Schaumstoffen mit hoher Ermüdungsresistenz und mit Stauchhärten von > 20 hPa, besser noch von ≥ 30 hPa und am besten von ≥ 40 hPa (siehe oben) hergestellt, und, was den Punkt (b) anbelangt, tailliert ausgeführt (siehe z. B. die Figuren 3 bis 6), wobei die Oberseiten oder Auflageflächen (d. h. die dem Benutzer zugewandten Seiten) dieser Segmente oder Basissegmente vorzugsweise noch weitergehend in kleinere Segmente oder Untersegmente unterteilt sind, die gegebenenfalls auch seitlich tailliert sind.

Die beiden den vorstehenden Punkt (b) betreffenden Eigenschaften, die Taillierung und die weitergehende Feinsegmentierung von Basissegmenten, sind zwar in der Patent-Literatur behandelt worden - allerdings in anderen Zusammenhängen, als sie hier angesprochen sind.

So wird in der DE 100 19 449 A1 ein Verfahren vorgestellt, das zum Ziel hat, die sogenannte Knicklast - das ist ein charakteristischer Punkt einer jeden Schaumstoff-Federkennlinie (siehe die Erläuterungen weiter unten zur Figur 2) u. a. durch geeignete Konturierung von Schaumstoffsegmenten so weit zu senken, dass der S-förmige, also zweiphasige, Verlauf der Federkennlinie in einen einphasigen Verlauf übergeht, das Schaumstoffsegment folglich Hookesches Kompressionsverhalten zeigt. Ein solches Verhalten wird u. a. von Liegeunterlagen gefordert, die speziell zur Weichlagerung von Personen dienen sollen.

In der DE 41 24 044 A1 wird von Matratzen-Segmenten gesprochen, die zumindest in ihrem oberen Bereich in nebeneinander liegende Untersegmente unterteilt sind - allerdings ohne die explizite Angabe von Gründen, wozu diese weitergehende Segmentierung dienen soll.

Dazu äußert sich die DE 100 11 472 A1, worin gesagt wird, dass die Feinsegmentierung eines Polsters die Schwingungsübertragung von einer mechanischen Vibrationsvorrichtung über das Polster auf den aufliegenden bzw. aufsitzenden Körper erleichtert und damit zu einer Mikromassage des Körpers führt. Das gleiche soll für die direkte Übertragung von körpereigenen Schwingungen, wie Puls oder Atmen, auf das Polster und zurück auf den Körper gelten.

In den beiden eben genannten Druckschriften ist jedoch die Verbreiterung bzw. Verfeinerung des Auflagedruckkes, der sich durch die weitergehende Segmentierung erreichen lässt und der bei der Lagerung von Dekubitus-gefährdeten Patienten eine wichtige Rolle spielt, nicht genannt.

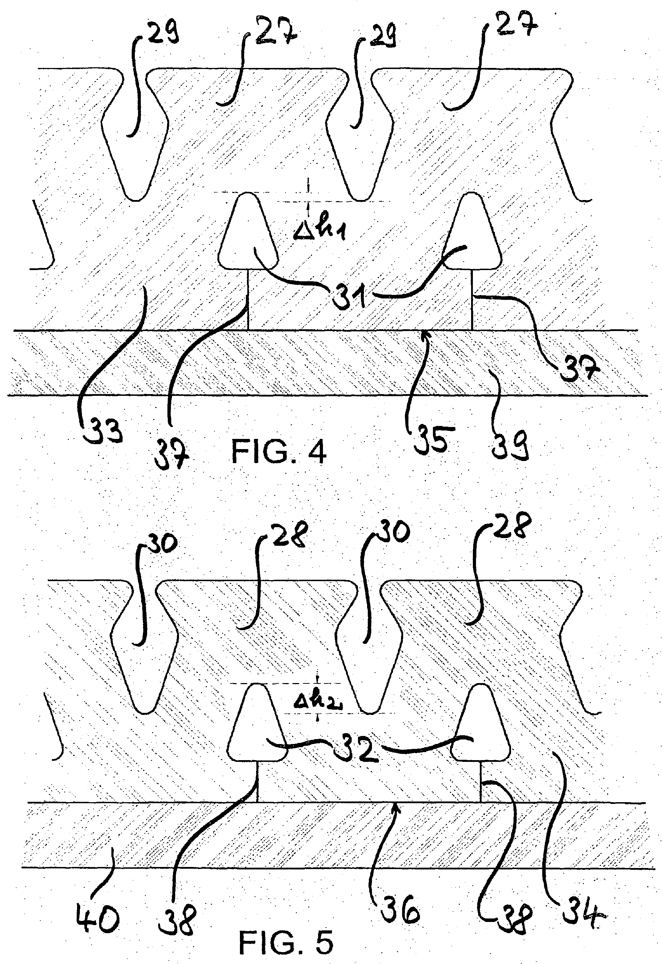

Eine weitere signifikante Verbesserung der taillierten Schaumstoffsegmente wird dadurch erreicht, dass die Unterseiten der Schaumstoffsegmente von unten her mit, vorzugsweise mittigen, Ausschnitten, insbesondere Nuten, und gegebenenfalls mit Einschnitten versehen sind. Auf diese Weise wird die Fähigkeit der taillierten Segmente, sich an die Form des Körpers des Benutzers weitestgehend anzupassen, erhöht (siehe z. B. die Figuren 4 und 5).

Die Optimierung aller Segmenteigenschaften für die Anti-Dekubitus-Tauglichkeit einer Matratze wird erfindungsgemäß dadurch ergänzt, dass die Eigenschaften der Abdeckung, insbesondere in der Form von Bezügen bzw. Bespannungs-Textilien, denen der Segmente angepasst werden. Die Abdeckungen bzw. Bespannungs-Textilien werden in diesem Sinne so ausgebildet, dass sie atmungsaktiv sind, dass man sie zum Zwecke der Reinigung abnehmen kann und dass sie die individuelle Beweglichkeit der Segmente nicht beeinträchtigen.

Zum Zwecke einer maximalen Eigenbeweglichkeit der Segmente unter der optional vorgesehenen Abdeckung ist das Polster nach der Erfindung bevorzugt so ausgebildet, dass

(a) die Abdeckung, zumindest über den dem Benutzer zugewandten Flächen der Schaumstoffsegmente, ein reversibel elastischer, insbesondere bi-elastischer, Bezug ist oder einen solchen Bezug umfasst, wobei vorzugsweise die reversible Elastizität, insbesondere Bi-Elastizität, des Bezugs, bevorzugt insoweit, als dieser zur großflächigen Abdeckung der dem Benutzer zugewandten segmentierten Schaumstofffläche des Polsterkerns dient, Werte der reversiblen Elastizität, insbesondere der Bi-Elastizität, besitzt, welche die nachstehend angegebenen Größen haben: die Elastizitäten bzw. Bi-Elastizitäten sind nach einem standardisierten Verfahren zu messen: "Zwickdehnung (30 N)" - und zwar in Quer- und Längsrichtung des Textils; die Zahlenwerte der Dehnung in diesen beiden Hauptrichtungen sollten sich mindestens wie 1:5 verhalten. Zahlenverhältnisse von etwa 1:2 sind aber vorzuziehen und am besten geeignet sind Zahlenverhältnisse von ca. 1:1 (quadratische Bi-Elastizität); hierbei kann - je nach Machart des Textils - entweder dessen Längsrichtung oder dessen Querrichtung die größere Dehnbarkeit besitzen; die Dehnbarkeiten in einer der beiden Hauptrichtungen (Längs- und Querrichtung) sollten mindestens 20% betragen; besser geeignet sind Dehnbarkeiten von ca. 100%, am besten beeignet Dehnbarkeiten von mehr als 200%. Insgesamt optimal sind folglich quadratische Bi-Elastizitäten mit Dehnbarkeiten von mehr als 200% sowohl in Quer- als auch in Längsrichtung; und/oder

(b) der Bezug zumindest in seinem, den Oberseiten der Schaumstoffsegmente zugewandten Bereich doppellagig ausgeführt ist, wobei die untere, mit dem, gegebenenfalls beflockten, Schaumstoff in Kontakt befindliche Lage aus einem atmungsaktiven, elastischen, bevorzugt bi-elastischen, und auf dem, gegebenenfalls beflockten, Schaumstoff gleitfähigem Material besteht, und wobei die obere, dem Benutzer zugewandte Lage auf der unteren Lage gleitfähig sowie ebenfalls elastisch, bevorzugt bi-elastisch, und atmungsaktiv ist, wobei ferner vorzugsweise die obere Lage auf ihrer Unterseite aus besonders gleitfähigem Material gefertigt oder mit einer gleitfähigen Ausrüstung versehen ist; und/oder

(c) der Bezug oder die untere Lage des doppellagigen Bezugs die gesamte segmentierte Schaumstofffläche des Polsterkerns kontinuierlich bedeckt; oder

(d) der Bezug jedes einzelne Schaumstoffsegment gesondert, vorzugsweise in der Form von jeweils einer abnehmbaren Kappe, bedeckt, wodurch gegenüber der Verwendung eines großflächigen Bezugs, der viele Schaumstoffsegmente überspannt, eine maximale Entkopplung der einzelnen Schaumstoffelemente und damit eine feinstmögliche Druckverteilung erreicht wird.

Eine leichte Abnehmbarkeit der optionalen Abdeckung zum Zweck der Reinigung und eine noch weitergehende Entkopplung der individuellen Segmentbeweglichkeiten lässt sich dadurch erreichen, dass

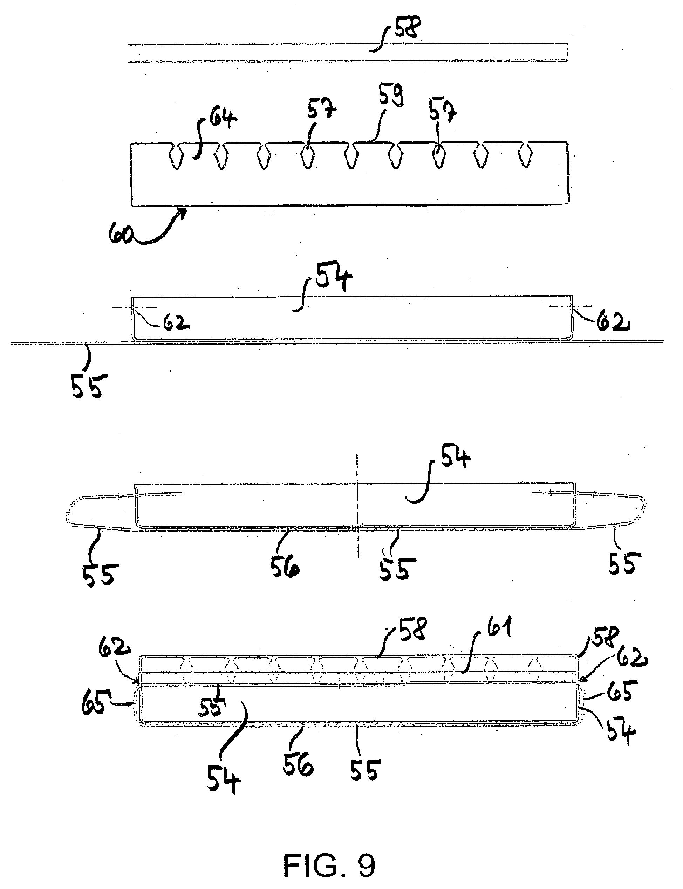

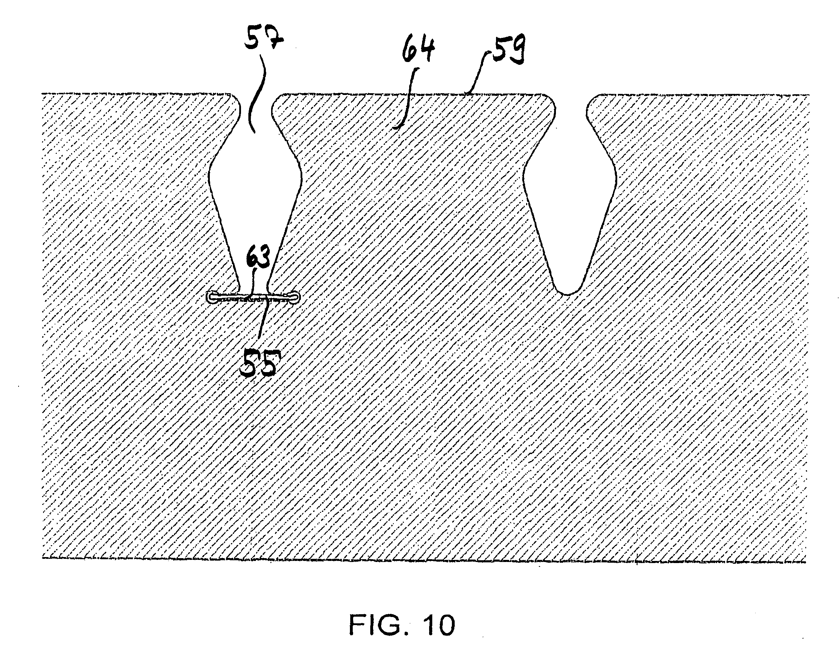

(A) die Oberflächen des Schaumstoffs, soweit sie der Abdeckung (siehe auch unten), insbesondere dem oberen, abnehmbaren Teil der Abdeckung (wie sie vorzugsweise in der unten anhand der Figuren 9 und 10 beschriebenen, gut transportierbaren Ausführung der Erfindung vorgesehen ist), zugewandt sind, mit einer Beflockung versehen sind;

(B) bevorzugt die gesamte Oberseite des Schaumstoffs des Polsterkerns beflockt ist;

(C) der verwendete Flock dem Bereich von 0,5 bis 22 dtex entnommen ist; und/oder

(D) der verwendete Flock antistatisch ausgerüstet ist.

Schließlich ist die Transportierbarkeit der erfindungsgemäßen Polster, insbesondere in ihrer Ausbildung und Verwendung als Anti-Dekubitus-Matratzen, vor allem im Klinikbetrieb wichtig, damit die Schaumstoffsegmente und der hochelastische Bezug beim Transport nicht durch Risse oder dergleichen beschädigt werden.
Eine solche äußerst schonende und sichere Transportierbarkeit wird bevorzugt dadurch erreicht, dass

(1) die abnehmbare Abdeckung des Polsterkerns, soweit sie sich nicht über der Oberseite der Schaumstoffsegmente erstreckt, in der Form einer, vorzugsweise textilen, Wanne oder Schale gestaltet ist, in die der Polsterkern einfügbar ist und die aus einem Material besteht, das gegenüber dem Material der auf den Schaumstoffsegmenten vorgesehenen Abdeckung wesentlich reißfester und weniger elastisch ist;

(2) die Wanne oder Schale aus schwer entflammbarem Material besteht;

(3) an der Wanne oder Schale Tragegriffe, insbesondere in der nachstehend in Figur 9 angegebenen Weise, vorgesehen sind;

(4) am Boden der Wanne oder Schale Stränge, vorzugsweise Riemen, Gurte oder Seile, befestigt sind, deren Enden zu Tragegriffen geschlossen sind oder an denen Tragegriffe angebracht sind oder in welche Tragegriffe in sonstiger Weise integriert sind;

(5) die Stränge durch die Seitenwände der Wanne oder Schale hindurchgeführt sind, am Boden von Nuten zwischen Schaumstoffsegmenten im Inneren der Wanne oder Schale verlaufen und sich, bevorzugt im Inneren der Wanne oder Schale, zu Ringen schließen lassen, die vorzugsweise dadurch lose eingelegte Bestandteile, insbesondere Gruppen von Schaumstoffsegmenten, des Polsterkerns befestigen.

Eine weitere besonders bevorzugte Ausgestaltung der Erfindung zeichnet sich dadurch aus, dass

(a) zumindest einige der Schaumstoffsegmente, vorzugsweise alle, je mit einer Sprungfederstruktur kombiniert sind; die aus wenigstens einer Sprungfeder besteht;

(b) das jeweilige Schaumstoffsegment bevorzugt auf die Sprungfeder aufgesetzt, insbesondere aufgesteckt, oder in sonstiger Weise lösbar darauf aufgebracht ist;

(c) vorzugsweise die einzelnen Sprungfedern bzw. -federstrukturen im oberen Bereich nicht fest mit benachbarten Sprungfedern bzw. -federstrukturen verbunden und dort folglich frei schwingbar und damit im Wesentlichen unabhängig voneinander elastisch komprimierbar sind; sowie

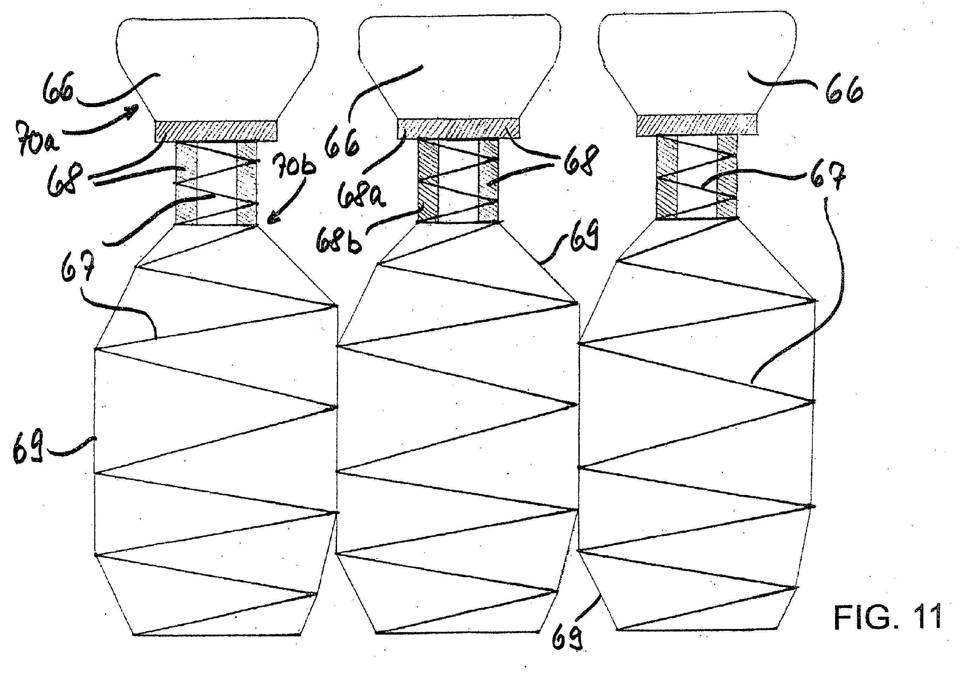

(d) besonders bevorzugt die einzelnen Kombinationen aus Schaumstoffsegment und Sprungfeder bzw. -federstruktur im oberen Bereich tailliert sind (siehe Figur 11).

Wird demgemäß auf jeder der Spiralfedern ein separates, atmungsaktives und elastisches Polster, vorzugsweise aus einem Polyurethan-Schaumstoff, aufgebracht und geschieht dieses erfindungsgemäß auf reversible Weise, beispielsweise mittels einer Steckkopplung, dann lassen sich verunreinigte oder verschlissene Polster jeweils einzeln abnehmen und austauschen. Darüber hinaus kann man zur Taillierung den oberen Teil der Polster-/Federkonstruktion, insbesondere im Bereich der Steckkopplung, so weit zu einer Taille verjüngen (siehe Figur 11), dass die Polster-/Federkonstruktion über ihre individuelle vertikale Komprimierbarkeit hinaus in ihrem oberen Bereich eine dreidimensionale Kippbarkeit bzw. Drehbarkeit (ähnlich wie bei den Schaumstoffsegmenten der Figuren 3 bis 6) hinzugewinnt. Ihre Anpassungsfähigkeit an den aufliegenden Körper wird dadurch erheblich gesteigert.
Diese erfindungsgemäße Ausbildung ist speziell für die private, beispielsweise häusliche, Anwendung bestimmt, sofern als Sprungfedern solche aus Metall verwendet werden, während die Matratzen für Kliniken sowie Pflege- und Altenheime - da diese im Hinblick auf Röntgenaufnahmen des liegenden Patienten kein Metall enthalten dürfen - in der vorstehenden Ausführungsform nichtmetallische Federn als Sprungfedern haben.
Die vorstehenden sowie weitere Vorteile und Merkmale der Erfindung werden nachstehend anhand von bevorzugten Ausführungsformen von erfindungsgemäßen Polstern, insbesondere von Matratzen, unter Bezugnahme auf die Figuren der Zeichnung näher beschrieben und erläutert; es zeigen:

Figur 1      ein Diagramm, welches das durch Untersuchungen im Rahmen der Erfindung ermittelte Ermüdungsverhalten von Polyurethan- und Latexschaumstoffen in Abhän- gigkeit von dem Verhältnis von Stauchhärte zu Raumgewicht veranschaulicht;

Figur 2      Federkennlinien eines Polyurethanschaumstoffwürfels vor und nach einem Dauerbelastungstest, wobei außerdem für die obere Federkennlinie die Knicklast eingezeichnet ist;

Figur 3      Teilquerschnittsansichten von segmentierten Schaum- stoffkernen, in denen die Schaumstoffsegmente als taillierte Pyramidenstümpfe mit gerundeten Kanten und ebenen Oberseiten (oben) und mit Oberseiten, die durch Nuten in Untersegmente unterteilt sind (Mitte und unten), ausgebildet sind;

Figur 4      eine Querschnittsansicht von taillierten Schaum- stoffsegmenten, ähnlich der Figur 3, in denen die Sockel der Schaumstoffsegmente von unten her mittig mit Nuten versehen und auf eine Schaumstoffplatte als Träger aufgebracht sind;

Figur 5      eine der Figur 4 entsprechende Ansicht, wobei je- doch die unteren mittigen Nuten relativ zu den obe- ren Nuten zwischen den Schaumstoffsegmenten auf ei- nem höheren Niveau ausgebildet sind;

Figur 6      einen vollständigen segmentierten Schaumstoffkern für eine Anti-Dekubitus-Matratze, dessen Aufbau den Figuren 4 und 5 entspricht, wobei jedoch zusätzlich die Oberseiten der Schaumstoffsegmente in feinere Untersegmente im Sinne der Figur 3, unten, unter- teilt sind (die verschiedenen Helligkeiten bedeuten - abgesehen von der untersten Platte - keine unter- schiedlichen Materialien, sondern dienen nur dazu, die Struktur deutlicher hervorzuheben);

Figur 7     eine Ausführungsform einer vollständigen Anti-Deku- bitus-Matratze mit Bodenplatte und Zarge als Halte- rung für die Schaumstoffsegmente und mit einer dop- pellagigen Bespannung, die aus Darstellungsgründen teilweise weggeschnitten ist;

Figur 8     einen Längsschnitt (oben) und Querschnitt (unten) durch eine Anti-Dekubitus-Matratze der in Figur 7 dargestellten Art (ohne Bespannung), wobei jedoch der segmentierte Schaumstoffkern in drei Teil- schaumstoffkerne unterteilt ist, deren Schaumstoffe entsprechend der Belastung durch den Benutzer un- terschiedlich sind;

Figur 9     eine Querschnittsansicht der Einzelelemente und des zusammengebauten Zustands einer Anti-Dekubitus- Ma- tratze mit Tragekonstruktion;

Figur 10     eine Detailansicht einer Anti-Dekubitus-Matratze der Figur 9, die den Verlauf eines bandförmigen Strangs in einer Nut des segmentierten Schaumstoff- kerns veranschaulicht; und

Figur 11     einen vertikalen Teilquerschnitt durch eine Ausfüh- rungsform der Erfindung, in welcher die Schaum- stoffsegmente je mit einer Sprungfeder kombiniert sind, wobei jede Kombination aus Schaumstoffsegment und Sprungfeder im oberen Bereich tailliert ist.

Wie oben dargelegt wurde, ist das Problem einer langzeit-stabilen Elastizität segmentierter Schaumstoffmatratzen bzw. -polster bisher - unabhängig vom Konstruktionsprinzip und vom Herstellungsverfahren - nur sehr unbefriedigend, um nicht zu sagen überhaupt nicht gelöst worden, so dass der vorliegenden Erfindung zunächst die Frage zugrunde lag, ob ein segmentierter Schaumstoffkern für Matratzen bzw. Polster verfügbar gemacht werden kann, der bei einem akzeptablen Beschaffungspreis eine lange Lebensdauer besitzt.

Zur Beantwortung dieser Frage wurde ein Untersuchungsprogramm durchgeführt, in dessen Verlauf zahlreiche Polyurethan-Schaumstoffe (Normal- und Kaltschäume) und auch einige Latex-Schäume unter normierten Bedingungen auf ihr Ermüdungsverhalten hin untersucht und miteinander verglichen wurden. Die Prüfkörper bestanden aus Würfeln mit Kantenlängen von 9 cm, weil diese Form und diese Größe etwa derjenigen von Matratzen-Segmenten entsprechen und darum unmittelbare Rückschlüsse auf deren Verhalten unter Belastung zulassen. Bestimmt wurden:

- Die Raumgewichte (R, bestimmt als $g/1000 \text{ cm}^3$).

- Die Stauchhärten (S, statisch bestimmt als $kp/100 \text{ cm}^2$ bei 40% Volumen-Kompression des Prüfkörpers vor und nach einem Dauertest).

- Die Quotienten (Q bestimmt als $kp \cdot cm/g$) aus Stauchhärten S (vor dem Dauertest) und Raumgewichten R. Q ist die vom Prüfkörper bei der ersten Kompression aufgenommene Energie - bezogen auf dessen Masse - (siehe die Gleichung (2) weiter unten).

- Die Ermüdungen (E bestimmt als $kp \cdot cm$). E ist das Integral über die beispielhaft in Figur 2 dargestellte Fläche zwischen den Federkennlinien des Schaumstoffs vor und nach dem Dauertest, d. h. die während des Tests vom Prüfkörper irreversibel aufgenommene Energie. Der Dauertest bestand aus 120.000 Kompressionszyklen mit einer Kompressionsfrequenz von 1,5 Hz (in Anlehnung an die Stauchhärte-Bestimmung EN ISO 3386-1).

Die Untersuchungsergebnisse sind in Figur 1 schematisch zusammengefasst. Dort ist die Ermüdung E gegen den Quotienten Q aufgetragen. Hierbei ist zu beachten, dass die ermittelten balkenförmigen grauen Messgeraden die Messungen an einer Vielzahl von Polyurethan- und Latexschaumstoffen unterschiedlicher Stauchhärten und Raumgewichte erforderlich gemacht haben.

Zur Veranschaulichung: Die Zunahme von Q bedeutet wachsende Steifheit und abnehmendes Gewicht des geprüften Schaumstoffs. Die Abnahme von Q steht für abnehmende Steifheit und zunehmendes Gewicht. Schwere/ weiche Schäume ermüden somit langsamer als leichte/steife Schäume.

Die Figur 1 zeigt auf den ersten Blick einen einfachen linearen Zusammenhang zwischen den Größen E und Q. Völlig unerwartet ist jedoch, dass die Funktion anscheinend unstetig ist und erst bei einem definierten Ausgangswert q auf der Abszisse beginnt - entsprechend der nachstehenden Gleichung (1).

Die Funktion hat also die Form

$$Q = q + p \cdot E \qquad (1)$$

mit

$$Q = S / R \qquad (2)$$

und der Folge

$$Q = q \Rightarrow E = 0 \qquad (3)$$

Da E keine negativen Werte annehmen kann, zeigt die Existenz von q, dass es ein kritisches Verhältnis q von Stauchhärte zu Raumgewicht gibt, bei dessen Unterschreitung unter den Bedingungen des o. g. Dauertestes keine weitere Ermüdung der Schaumstoffe zu messen ist.

Mit anderen Worten: Bei Q-Werten unterhalb von q verhalten sich die untersuchten Schaumstoffe im Dauertest ideal-elastisch. Der Zahlenwert von q gibt an, wie groß dieses kritische Verhältnis ist; er liegt bei ca. 0,5 [kp•cm/g]. Die zugehörigen Vertrauensintervalle (Figur 1, graue Balken) erstrecken sich von etwa 0,4 bis 0,6 [kp•cm/g]. Natürlich ist nicht damit zu rechnen, dass q eine absolute Konstante ist. Man sollte erwarten, dass sie mit stärkerer Belastung der Schaumstoffe (also mit größerer Zyklenanzahl und/oder stärkerer Kompression pro Zyklus) sinkt.

Erstaunlicherweise beschreibt die Gleichung (1) das Verhalten sowohl von Polyurethan- als auch von Latex-Schäumen. Innerhalb der vorliegenden Fehlergrenzen sind sogar die Zahlenwerte von q und die Breiten der Vertrauensintervalle für Polyurethan- und Latex-Schäume identisch. Ein Unterschied zwischen beiden findet sich nur in der Neigung p der linearen Funktion. Sie ist für Latex-Schäume etwa dreifach steiler als für Polyurethan-Schäume. Das bedeutet, dass bei Vorgabe gleicher Q-Werte ein Latexschaum dreifach stärker ermüdet als ein Polyurethan-Schaum. Mit anderen Worten: Bei Vorgabe von gleicher Stauchhärte und gleicher Ermüdung benötigt der Latexschaum ein dreifach höheres Raumgewicht als der Polyurethan-Schaum.

Nun werden Schaumstoffe in der täglichen Praxis nicht durch Q charakterisiert, sondern durch dessen Kehrwert $Q^{-1}$. Aus z. B. Q = 0,5 wird dann $Q^{-1}$ = 2. Übersetzt man darum unsere Benennung in konventionelles Maß, so folgt: Alle Schaumstoffe - sowohl aus Polyurethan als auch aus Latex, deren $Q^{-1}$-Kennzahlen gemäß der Erfindung Werte $\geq$ 50/25, $\geq$ 60/30, $\geq$ 80/40 und $\geq$ 100/50 etc. besitzen (gemessen in kg/m$^3$ : hPa), zeigen unter den genannten Belastungsbedingungen keine Ermüdungserscheinungen. Das Gemeinsame dieser $Q^{-1}$-Kennzahlen von Schaumstoffen gemäß der Erfindung ist, dass sie sich wie $\geq$ 2/1 verhalten.

Zum Vergleich mit dem Stand der Technik sei angemerkt, dass die $Q^{-1}$-Kennzahlen handelsüblicher normaler Matratzen-Schaumstoffe etwa dem Verhältnis 1/1 entsprechen - und zwar unabhängig davon, ob daraus unsegmentierte oder segmentierte Matratzenkerne gefertigt werden sollen.

Es ist zwar aus der Figur 1 klar, dass es besonders zu bevorzugen ist, wenn der Schaumstoff einer segmentierten Schaumstoffmatratze bzw. allgemein eines segmentierten Schaumstoffpolsters die Ermüdung Null hat. Jedoch zeigen die Ergebnisse der im Rahmen der Erfindung durchgeführten Untersuchungen, dass ein Schaumstoff, dessen Ermüdung E unter den obigen Dauertestbedingungen $\leq$ 0,1 kp·cm beträgt, noch eine ausreichend lange Lebensdauer besitzt.

Wie bereits oben angesprochen, lässt sich die Ermüdung eines Schaumstoffs gemäß Figur 2 aus den Federkennlinien vor und nach dem Dauertest durch Bestimmung der Fläche zwischen den Federkernlinien ermitteln, woraus sich die oben im allgemeinen Beschreibungsteil und in den Ansprüchen 1 und 3 angegebenen Bedingungen ergeben. Diese Bedingungen gelten dann allgemein für jeden geeigneten Schaumstoff.

Die mittlere Stauchhärte eines segmentierten Matratzenkerns sollte etwa gleich sein der Stauchhärte eines vergleichbaren nicht-segmentierten Kerns. Unter dieser Voraussetzung sollten beide Matratzenkerne etwa gleich großen Liegekomfort bieten. Deshalb muss - wegen der Existenz und der Konturen der für die Segmentierung erforderlichen Nuten bzw. Luftkanäle - die Stauchhärte des segmentierten Schaumstoffes per se größer sein als die des unsegmentierten Schaumstoffes. Wie groß der Unterschied im Einzelfall ist, wird also durch zwei Faktoren bestimmt: Erstens durch den Volumenanteil der Nuten - er liegt zwischen 10% und 25% und gelegentlich auch darüber; zweitens durch die Nutenkontur bzw. den Verlauf des Nutenquerschnitts - denn die größte Belastung erfährt ein Segment im Bereich seines kleinsten Querschnittes, gegebenenfalls also in der Taille.

Besitzt somit ein unsegmentierter Schaumstoff eine Stauchhärte von z. B. 35 hPa, so muss ein Schaumstoff, aus dem ein segmentierter Kern mit würfelförmigen Segmenten gefertigt wird, und der im übrigen denselben Zwecken dienen soll, eine Stauchhärte von z.B. 40 hPa aufweisen. Dies bedingt aber, dass auch sein Raumgewicht zu erhöhen ist, damit sich seine Ermüdung gegenüber derjenigen des unsegmentierten Schaumstoffes nicht verschlechtert.

Noch ausgeprägter ist die Situation bei taillierten Segmenten, und zwar besonders dann, wenn diese regelmäßig beinahe vollständig komprimiert werden sollen. Das ist immer dann der Fall, wenn ein segmentierter Schaumstoffkern mit einem Textilbezug versehen ist, der die elastische Querspannung zwischen benachbarten Segmenten minimiert - im Extremfall also, wenn jedes Segment mit seinem eigenen individuellen Häubchen als Abdeckung versehen ist. Die Stauchhärte des Schaumstoffes muss dann möglicherweise sogar auf Werte von 45 hPa oder mehr angehoben werden - wiederum bei entsprechender Erhöhung des Raumgewichtes.

Nach Kenntnis der obigen Ergebnisse der Erfindung zeigt eine Rückschau auf den Stand der Technik das folgende Bild: Wie groß das Raumgewicht von unsegmentierten oder segmentierten Matratzenkernen zu sein hat, ist bisher der Erfahrung und dem "Fingerspitzengefühl" des Schaumstoff-Herstellers überlassen worden. Als qualitative Regel gilt: Schaumstoffe höheren Raumgewichts ermüden langsamer als Schaumstoffe niedrigeren Raumgewichts, wobei als Anhaltspunkt für die Auswahl von Stauchhärten das Gewicht des aufliegenden Körpers gilt. Beispielsweise lässt sich einer Zusammenstellung der Schaumstoffdaten aller dem Anmelder zugänglichen segmentierten Anti-Dekubitus-Matratzen aus Polyurethan-Schaum (von denen keine tailliert war) entnehmen, dass im Mittel die Q-Werte dieser Schäume ohne erkennbare weitergehende Systematik zu Ermüdungswerten von signifikant > 0,1 kp•cm führen. Hieraus folgt also, dass im Mittel keine der im Handel erhältlichen Anti-Dekubitus-Matratzen eine langzeit-stabile Elastizität besitzt. Untersucht man die hieraus gebildete Untermenge derjenigen Anti-Dekubitus-Matratzen, deren Schaumstoff-Stauchhärten oberhalb von 30 hPa liegen und die folglich nicht der Weichlagerung dienen, dann stellt sich die Situation noch deutlicher dar: Alle Q-Werte liegen zwischen 0,8 und 1,85 [kp•cm/g] mit einem Mittelwert bei 1,20 [kp·cm/g], woraus dann eine mittlere Ermüdung E von 0,223 [kp·cm/g] folgt.

Darüber hinaus existiert nach Kenntnis des Anmelders auch keine allgemein bekannte technische Lehre, der die quantitativen Angaben zu entnehmen wären, nach denen Stauchhärten und Raumgewichte so aufeinander abstimmbar sind, dass langzeitstabiles Elastizitätsverhalten resultiert.

Wie bereits weiter oben im allgemeinen Beschreibungsteil erläutert worden ist, sind die Schaumstoffsegmente eines Polsters, insbesondere einer Anti-Dekubitus-Matratze, gemäß der Erfindung bevorzugt seitlich rundum tailliert, mit einer zusätzlichen Feinsegmentierung ausgebildet und von unten her mit mittigen Nuten sowie gegebenenfalls Einschnitten versehen. Diese Gestaltung ist in bevorzugten Ausführungsformen in den Figuren 3, 4 und 5 in je einem Teilquerschnitt veranschaulicht.

In Figur 3 sind Teilquerschnitte durch segmentierte Schaumstoffkerne 1, 2 und 3 gezeigt, die Segmente 4, 5 und 6 von pyramidenstumpfförmiger Grundstruktur haben, welche bei 7, 8 und 9 seitlich rundum tailliert sind. Diese Segmente 4, 5 und 6 bilden den oberen Teil des jeweiligen Schaumstoffkerns 1, 2 bzw. 3 und sind einstückig mit dessen unsegmentiertem plattenförmigem unteren Teil 10, 11 und 12 ausgebildet. Obwohl die Segmente 4, 5 und 6 vorliegend eine pyramidenstumpfförmige Grundstruktur mit quadratischem Querschnitt (parallel zur Oberseite 13, 14 bzw. 15) haben, der an der Oberseite 13, 14 bzw. 15 kleiner als an der Unterseite (Sockel) ist, wo die Segmente in den plattförmigen Teil 10, 11 bzw. 12 übergehen, kann die Grundstruktur der Segmente auch eine andere sein, z. B. würfelförmig, prismatisch, quaderförmig, zylindrisch oder dergleichen.

Während die Oberseiten 13 der Segmente 4 eben sind, sind die Oberseiten 14 der Segmente 5 durch zwei zueinander senkrechte Zusatznuten, von denen nur eine Nut 19 zu sehen ist, in vier feinere, teilweise taillierte Untersegmente unterteilt, und die Oberseiten 15 der Segmente 6 sind durch vier paarweise parallele Zusatznuten, von denen nur zwei Nuten 20 zu sehen sind, in neun feinere, ebenfalls teilweise taillierte Untersegmente unterteilt. Die Feinunterteilung lässt sich natürlich noch weiter treiben. So ist in Figur 6 beispielsweise eine 16-fache Unterteilung zu sehen.

Wie außerdem die Figur 3 zeigt, sind die oberen und unteren Ränder der Segmente 4, 5 und 6 gerundet. Außerdem sind an bestimmten gegenüberliegenden unteren Enden von gegenüberliegenden unteren Segmenten Quernuten 21, 22 bzw. 23 vorgesehen, welche zum Anbringen von Trage- und/oder Befestigungsbändern dienen, wie weiter unten anhand der Figuren 9 und 10 beschrieben ist.

Damit die Segmente ihre Wirkung maximal entfalten können, dürfen sie weder zu niedrig noch zu hoch sein, d. h. die Nuten 24, 25 und 26 zwischen den Segmenten 4, 5 und 6 dürfen nicht zu flach und nicht zu tief sein. Geeignet sind Nuttiefen zwischen 30 und 90 mm, am besten geeignet zwischen 50 und 70 mm. Da die dreidimensionale Beweglichkeit der Segmente 4, 5 und 6, speziell deren Kippbarkeit, bevorzugt symmetrisch sein soll, müssen in diesem Fall sowohl die gezeigten Längsnuten 24, 25, 26 als auch die in Figur 3 nicht sichtbaren, dazu senkrecht verlaufenden Quernuten identische Profile besitzen, d. h. die Segmente 4, 5 und 6 rundum bzw. auf allen seitlichen Flächen gleich tailliert sein.

Für die Wirksamkeit der Taillierung gilt Ähnliches wie für die Wirksamkeit der Segmenthöhen: Die Taille 7, 8, 9 sollte nicht im oberen und nicht im unteren Bereich der Nuten 24, 25 und 26 liegen, sondern etwa im mittleren Drittel der Nuttiefe - am besten rund 30 mm unterhalb der Segment-Auflageflächen 13, 14, 15. In der Position der Taille 7, 8 und 9 unterscheiden sich die Profile der Nuten 24, 25 und 26 taillierter Segmente 4, 5, 6 charakteristisch von den sogenannten "Tropfenprofilen", denen man gelegentlich begegnet und die an einer konstruktiven Unstimmigkeit leiden: Sind die Tiefen der Nuten so groß, dass sie eine der Dekubitus-Prophylaxe angemessene Druckverbreiterung erzeugen, dann verklemmen sich häufig benachbarte Segmente aneinander bei schräger Belastung infolge der hohen Reibung zwischen Schaumstoff und Schaumstoff. Will man dagegen diese mechanische Behinderung vermeiden, so muss man die Nuttiefen so gering ansetzen, dass die erforderliche Druckverbreitung bzw. -verfeinerung nicht erreicht wird. Nuten mit Tropfenprofil sind also, im Hinblick auf Anti-Dekubitus-Wirkung, stets auf konstruktive Hilfsmaßnahmen angewiesen.

Die Breite der Nuten 24, 25 und 26 in Taillenhöhe muss so mit der Breite der Nuten in Höhe der Auflagefläche 13, 14, 15 und mit der Tiefe der Nuten 24, 25, 26 abgestimmt sein, dass die Kippbewegung eines Segmentes 4, 5, 6 bei Belastung und bei Entlastung nicht durch die Anwesenheit von Nachbarsegmenten beeinträchtigt wird.

Die in den Figuren 4 und 5 dargestellte Kontur der Segmente 27, 28 des dortigen, jeweils oberen Nutsystems 29, 30 zeigt ein Beispiel für derart aufeinander abgestimmte Maße.

Die Anschmiegsamkeit der taillierten Segmente lässt sich noch weiter verbessern, wenn man in den Schaumstoffkern ein zusätzliches System von unteren Nuten 31, 32 einbringt - dergestalt, dass die zusätzlichen Nuten 31, 32 von unten her mittig in die Segmentsockel hineingreifen. Jedes Segment 27, 28 bekommt dadurch in Seitenansicht das Aussehen eines Tisches mit vier etwas gespreizten dicken Beinen (siehe insbesondere Figur 4, aber auch Figur 5).

Die Figuren 4 und 5 zeigen Teilquerschnitte durch zwei segmentierte Schaumstoffpolsterkerne, die sich von demjenigen der Figur 3, oben, dadurch unterscheiden, dass zu dem System der die Segmente 27, 28 "herausarbeitenden" oberen Nuten 29, 30 das vorstehend genannte System von unteren Nuten 31, 32 hinzukommt, die größtenteils unterhalb der Segmente 27, 28 in dem damit einstückigen plattenförmigen Teil 33, 34 ausgebildet und mit dessen Unterseite 35, 36 durch Einschnitte 37, 38 verbunden sind, wobei die Unterseite 35 bzw. 36 jeweils auf einer Bodenplatte 39, 40 aufgebracht, beispielsweise aufgeklebt, ist. Das Ausmaß des Hineingreifens der unteren Nuten 31, 32 in die Sockel der Segmente 27, 28 ist mit $\Delta h_1$ bzw. $\Delta h_2$ bezeichnet.

Durch die Kontur der Segmente 27, 28 und/oder die Höhenposition $\Delta h_1$, $\Delta h_2$ der unteren Nuten 31, 32 lassen sich die Höhen/Dicken der genannten Beine und damit die Beweglichkeiten und die Stauchhärten der Segmente 27, 28 kontinuierlich variieren (Figuren 4 und 5). Dieses ist unter anderem deswegen von Bedeutung, weil auf dem Markt nur Schaumstoffe mit diskreten Stauchhärten zu erhalten sind.

Da das System der oberen Nuten 29, 30 und das System der unteren Nuten 31, 32 ineinandergreift, die beiden Systeme zusammen also einen jeweils durchgängigen Hohlraum bilden, ist die Durchlüftung eines derart gestalteten Polster- bzw. Matratzenkerns so weitgehend ausgebildet, wie das aus mechanischen Gründen vertretbar ist (was auch bevorzugt für die anderen Polster, insbesondere Matratzen, der Erfindung gilt).

In langen Versuchsreihen mit tailliert-segmentierten und zusätzlich fein-segmentierten (Figur 3 Mitte und unten sowie Figur 6) Matratzenkernen wurden drei Haupteigenschaften derselben erreicht:

(A) Die Taillierung wirkt unerwarteterweise nicht nur der Immobilität von Patienten entgegen, sondern fördert geradezu deren Mobilität. Der Grund hierfür ist die nunmehr dreidimensionale Beweglichkeit der Segmente, speziell die Kippbarkeit der Segmentoberteile in der Taille. Bei etwas größeren Stauchhärten zeigen die taillierten Segmente eine ausgeprägte Stützwirkung auf die Wirbelsäule. Exponierte Körperteile, speziell Fersen und Rückgrat, rutschen bei geeigneter Textilbespannung bzw. geeignetem Bezug des Polsters bzw. der Matratze spontan in die Nuten zwischen einzelnen Segmenten und liegen dort weitgehend druckfrei, weil quasi hohlgelagert.

(B) Die zusätzliche Feinsegmentierung der Auflageflächen (Figur 3, Mitte und unten sowie Figur 6) resultiert in einer noch weitergehenden Verbreiterung bzw. Verfeinerung der Druckverteilung als die einfache Segmentierung und sie führt dazu, dass Körperbewegungen des Benutzers und körpereigene Schwingungen (Puls, Atmen) auf die durch die Feinsegmentierung erhaltenen kleinen Segmente und von dort phasenverschoben auf den Körper des Benutzers zurück übertragen werden. Das Resultat wirkt wie eine Mikromassage der Haut, wodurch deren Durchblutung und auch die Lymphdrainage angeregt werden. Die Wirksamkeit der Feinsegmentierung steigt mit abnehmender Größe der Feinsegmente (Figur 3, Mitte und unten sowie Figur 6). In Einzelfällen scheint die periphere Durchblutung sogar reflektorisch anzusteigen.

(C) Die Taillierung der Segmente bietet schließlich noch einen weiteren erheblichen Vorteil: Die Oberfläche jeder Anti-Dekubitus-Matratze muss aus hygienischen Gründen mit abnehmbaren und waschbaren atmungsaktiven Textilien bezogen sein. Damit dieses Textil nicht die Wirkung der Segmentierung - d. h. die individuelle, von Nachbarsegmenten unabhängige Komprimierbarkeit jedes einzelnen Segmentes - wieder einschränkt, muss entweder der Bezug aus hoch-bi-elastischem Material bestehen oder es muss jedes einzelne Segment seinen eigenen kleinen Bezug erhalten- eine Haube. Letztere Variante, die Haube, ist die theoretisch denkbar beste Lösung, weil sie die individuelle Komprimierbarkeit der Segmente überhaupt nicht beeinträchtigt. Die Taillierung bietet dabei eine geradezu ideale Möglichkeit, jede Haube auf ihrem Segment rutschfest und reversibel zu befestigen. Allerdings macht diese "Einzelhauben-Lösung" Schwierigkeiten bei der Beseitigung großflächiger Verunreinigungen.

Schließlich sei ausdrücklich darauf hingewiesen, dass taillierte Schaumstoff-Segmente zwar besonders anti-dekubituswirksam sind, aber gleichzeitig auch besonders schnell ermüden. Daraus ergibt sich die Forderung, erfindungsgemäß speziell für die Herstellung von tailliert-segmentierten Matratzenkernen, die weiter oben angegebenen ermüdungsresistenten Schaumstoffe zu verwenden.

Nach den Erfahrungen des Anmelders und Erfinders sind für die Lagerung von sehr leichten Personen auf tailliert-segmentierten Matratzenkernen Schaumstoffe mit Stauchhärten von mindestens > 30 bis 35 hPa angemessen. Wird gefordert, dass diese Unterlagen langfristig nicht ermüden sollen, sind Raumgewichte von mindestens 60 bis 70 kg/m$^3$ angesagt (für schwerere Personen sind beide Zahlenwerte entsprechend zu erhöhen).

Die Einsicht, dass die Segmentierung von Matratzenkernoberflächen bei Vorgabe von Segmentgröße, Segmentform, Stauchhärte und Lebensdauer sinnvollerweise einen Schaumstoff mit wohldefiniertem Raumgewicht voraussetzt, ist nach Kenntnis des Anmelders weder der Patent-Literatur noch anderen Druckschriften zu entnehmen.

Dieses erfindungsgemäße Merkmal, wonach bei segmentierten Schaumstoffkernen der Zahlenwert des Raumgewichts (angegeben in kg/m$^3$) rund doppelt so groß sein sollte wie der Zahlenwert der Stauchhärte (angegeben in hPa), ist somit neu und in keiner Weise naheliegend und liefert erstmals eine zuverlässige Basis für die zielgerichtete Entwicklung von segmentierten Matratzen/Polster-Schaumstoffen.

Nun sind schwere Schaumstoffe teurer als leichte. Auch sind Matratzen mit schweren Schaumstoffkernen schwieriger zu handhaben als solche mit leichten, was man im normalen Klinik- und Altenheim-Betrieb als lästig empfinden mag. Darum ist es zu bevorzugen, wie insbesondere in Figur 6 gezeigt ist, segmentierte Matratzenkerne 41 zumindest für diese beiden Einsatzbereiche nicht aus einem einzigen Block, sondern zweilagig zu fertigen. Sie besitzen dann eine unsegmentierte Bodenplatte 42 aus normalem, leichterem Schaumstoff und - darauf gelegt oder geklebt - eine segmentierte Auflage 43 aus schwererem erfindungsgemäßen Schaumstoff, insbesondere mit einer der o. g. Kennzahlen. Im Übrigen sind in Figur 6 Bezugszeichen der Figur 3, unten, eingefügt, was die Schaumstoffsegmente, Nuten etc. anbetrifft, so dass insofern auf die Erläuterung zur Figur 3, unterer Teil, verwiesen wird.

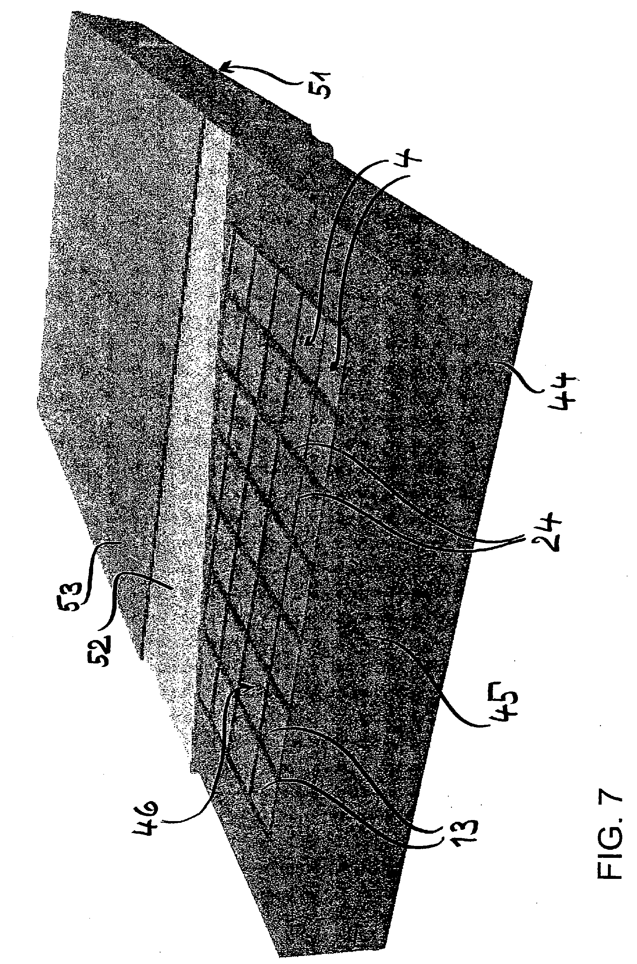

Man kann auch noch einen Schritt weiter gehen, wie in Figur 7 zu sehen ist, und auf die Bodenplatte 44 eine Zarge 45 aus gleichfalls normalem Schaumstoff aufsetzen und den hochgewichtigen Schaumstoff gemäß der Erfindung lediglich als segmentierte Einlage 46 in die Zarge 45 einfügen. Im Übrigen sind Bezugszeichen der Figur 3, oberer Teil, verwendet, so dass zu deren weiterer Erläuterung auf die Ausführungen zur Figur 3 Bezug genommen wird.

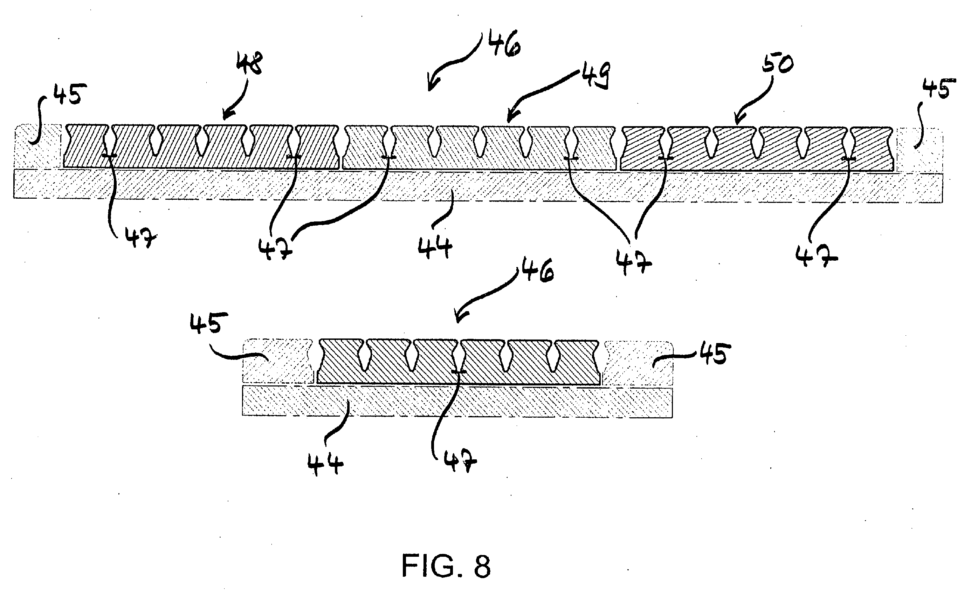

Schließlich lässt sich, wie die Figur 8 zeigt, auch die Einlage 46 nochmals unterteilen, beispielsweise der Länge nach in drei Teile 48, 49, 50 teilen. Dieses hat zwei weitere Vorteile: Erstens ist das Gewicht eines jeden Teilstücks der Einlage so gering (ca. 1,5 bis 2,0 kg bei Dreiteilung), dass es sich bequem auswechseln und z.B. reinigen lässt; zweitens bietet sich die Möglichkeit an, die Gesamteinlage aus Teilstücken mit verschiedenen Materialeigenschaften (Stauchhärte, Raumgewicht) zusammenzusetzen und auf diese Weise eine segmentierte und variable Mehrzonen-Matratze zu schaffen. Für die Bodenplatte und die Zarge sind die Bezugszeichen der Figur 7 verwendet worden (siehe dazu die dortigen Erläuterungen). Außerdem sind in der Figur 8 Quernuten 47 der Art gezeigt, die in Figur 3 mit 21, 22 und 23 bezeichnet sind und zum Einlegen von Gurten bzw. Riemen für die Anbringung einer Trage- und Befestigungsstruktur der Art dienen, wie sie weiter unten anhand der Figuren 9 und 10 erläutert ist.

In beiden Fällen, dem der Auflage 43 und dem der Einlage 46, wird der Anteil an schwerem und teurem Schaumstoff möglichst gering gehalten, ohne dass die Wirkung darunter leidet.

Eine Überschlagsrechnung zeigt, dass hiermit ein konstruktiver Kompromiss gefunden wurde, der bei Klinik- und Altenheim-Matratzen einen nur geringfügig erhöhten Kaufpreis (gegenüber gleichen Matratzen aus normalem Schaumstoff) mit praktisch beliebig langer Lebensdauer, Variabilität und Pflegeleichtigkeit verbindet.

Sollten die Anforderungen an eine segmentierte Matratze geringer sein als es dem o. g. Dauertest entspricht, oder wird aus anderen Gründen kein besonderer Wert auf langzeit-stabile Schaumstoff-Elastizität gelegt, so dürfen natürlich die obigen Kennzahlen der Schaumstoffe das Verhältnis 2/1 unterschreiten. Allerdings sollte das Verhältnis deutlich oberhalb von 1/1 bleiben.

Zur Optimierung aller Segmenteigenschaften ist es für die Anti-Dekubitus-Tauglichkeit einer Matratze weiterhin ganz wichtig, dass die Eigenschaften des Bezugs bzw. der Bespannungs-Textilien an diejenigen der Segmente angepasst sind: Der Bezug bzw. die Bespannungs-Textilien sollen atmungsaktiv sein, man muss ihn bzw. sie zum Zwecke der Reinigung abnehmen können und er bzw. sie dürfen die individuelle Beweglichkeit der Segmente nicht beeinträchtigen.

Auf die Vor- und Nachteile einer Einzelhauben-Bespannung wurde oben schon hingewiesen.

Demgegenüber ist ein bi-elastischer Gesamtbezug zwar billiger und leichter zu handhaben, bewirkt aber stets einen Rest von elastischer Querspannung bei der Komprimierung von Segmenten. Diese Restspannung sinkt mit zunehmender Bi-Elastizität des Bezuges. Die reversible Bi-Elastizität eines Gesamtbezuges muss - bei hoher Rückstellkraft - so hoch sein, dass bei Druckbelastung eines Schaumstoffpolster- bzw. -matratzenkernes die zur Komprimierung eines der Segmente benötigte Kraft erheblich größer ist als die gleichzeitig zur Spannung des darauf liegenden Bezugs bzw. Textils erforderliche Kraft. Tolerabel sind bi-elastische Bezüge bzw. Textilien, deren reversible Dehnbarkeiten in den beiden charakteristischen Messrichtungen (quer/längs) größer als 20% sind. Besser eignen sich Bezüge bzw. Textilien mit reversiblen Dehnbarkeiten von mehr als 100%. Die am besten geeigneten Materialien haben reversible Dehnbarkeiten von mehr als 200%.

Die Forderung, dass theoretisch die Elastizität eines Gesamtbezugs sehr hoch sein muss, ist schon in der DE 41 24 044 C2 ausgesprochen worden, allerdings noch ohne Angabe von praxisbewährten Zahlenangaben.

Es ist einleuchtend, dass sich die elastische Wirkung des Bezugs noch erheblich steigern lässt, wenn der Bezug bzw. das Textil auf dem Schaumstoff gleiten kann, so dass bei Druckbelastung eines Segmentes der Bezug bzw. das Textil aus der unbelasteten oder weniger belasteten Umgebung des Segmentes quasi "nachfließt". Dieses lässt sich am wirkungsvollsten durch reibungsreduzierendes Beflocken der Segmentauflageflächen erreichen, wie vorliegend die Segmentoberseiten oder die dem Benutzer zugewandten Flächen der Segmente im Rahmen der Beschreibung und Ansprüche auch bezeichnet werden.

Als besonders lästig erwies sich während der Versuchsreihen, die im Rahmen der Erfindung durchgeführt wurden, die hohe Reibung zwischen den geschnittenen Schaumstoffoberflächen und dem Bezug, insbesondere der elastischen Textilbespannung. Das Ab- und Aufziehen des Bezugs bzw. der Bespannung vor und nach der Reinigung wurde dadurch erheblich erschwert.

Dieses Problem wurde auf zwei Weisen gelöst. Erstens durch das vorstehend schon angesprochene Beflocken der äußeren Schaumstoffoberflächen an den kritischen Stellen und zweitens durch den Ersatz der bisher einlagigen Textilbespannung durch eine zweilagige Bespannung 51 der in Figur 7 gezeigten Art.

Der Innenbezug 52, also das dem Schaumstoff direkt aufliegende Material, ist ein hoch-elastischer und atmungsaktiver Gleitstoff; der Außenbezug 53 ist z. B. ein gleichfalls hoch-elastischer Baumwolljersey oder ein anderes hochelastisches, atmungsaktives Material, das auf dem Innenbezug 52 praktisch reibungsfrei gleiten kann.

Jede dieser beiden Maßnahmen allein - Beflockung bzw. Gleitbezug - ist zur Lösung des Problems hinreichend. Die Kombination beider Maßnahmen erweist sich jedoch als signifikant noch wirksamer.

Schließlich ist zu beachten, dass der Luftanteil und somit die Atmungsaktivität bei schweren Schaumstoffen niedriger ist als bei leichten. Darum ist es besonders wichtig, diesen geringeren Luftanteil jedenfalls so vollständig wie möglich mit der Außenluft in Verbindung zu bringen und zu diesem Zweck alle möglicherweise noch geschlossenen Schaumzellen zu sprengen. Dieses lässt sich bei Polyurethan-Schäumen am einfachsten durch Knallgas-Retikulierung erreichen: Alle noch verbliebenen Zellhäutchen werden in einer Hitzewelle geschmolzen. Das verflüssigte Material der Häutchen vereinigt sich mit dem Material der Stege und führt zu deren Verstärkung. Retikulierte Schäume ermüden darum langsamer als nichtretikulierte.

Das vollständige Öffnen der Schaumzellen führt nicht nur zu verbesserter Ventilation im normalen Betrieb, sondern auch zu verbesserter Drainage im Notfall. Beide zusammen erleichtern und beschleunigen bei tiefreichender Verschmutzung die Nassreinigung des Schaumstoffes und die anschließende Trocknung. Das trockene Mikroklima eines retikulierten Schaums erschwert schließlich die Ansiedlung von Hausstaubmilben und verringert somit die Allergiegefährdung des Patienten.

Die Verwendung von retikulierten Schaumstoffen für die Herstellung von Matratzen-Kernen wird nach Kenntnis des Anmelders und Erfinders in der Patent-Literatur nur einmal erwähnt - nämlich in der DE 199 61 753 A1. Dort ist sie allerdings auf Schäume mit einem Raumgewicht von maximal 60 kg/m$^3$ beschränkt. Weil die Raumgewichte der erfindungsgemäß verwendeten langzeit-stabilen Schaumstoffe, insbesondere Polyurethan-Schäume, aber deutlich darüber liegen können und möglicherweise in Einzelfällen sogar den Wert von 100 kg/m$^3$ überschreiten, ist es unerlässlich, den Raumgewichtsbereich für Retikulierungen über den Wert von 60 kg/m$^3$ hinaus zu erweitern.

Endlich ist eine Erscheinung zu berücksichtigen, die bei segmentierten Schaumstoffmatratzen des Standes der Technik auftrat, wonach sich im längerfristigen Klinikbetrieb mechanische Verschleißerscheinungen am Schaumstoffkern zeigten, sowie Kerbrisse, die von den Nuten zwischen den Segmenten ausgingen und sogar der Abriss ganzer Segmente. Ursache hierfür war, dass die Unterlagen kein hinreichend stabiles Tragesystem besaßen. Die Schaumstoffkerne waren vielmehr von der hochelastischen Bespannung ringsherum locker umgeben. Das führte dazu, dass die Unterlage an der Bespannung getragen wurde, die sich dabei außerordentlich stark ausdehnte. Die notwendig hohe Elastizität der Textilien erschwerte somit ein präzises Hantieren und verleitete das Pflegepersonal dazu, beim Tragen der Unterlage in deren segmentierter Oberfläche nach Halt zu suchen - mit dem obigen Resultat.

Um dieses Manko zu beheben, wurde, wie die Figuren 9 und 10 zeigen, eine feste bzw. starre Textilwanne 54 aus schwer entflammbarem Material konzipiert, in welche ein dem Nutenverlauf angepasstes Trageriemen- bzw. -gurtsystem 55 integriert ist. Die Riemen bzw. Gurte 55 sind unter dem Boden der Wanne 54 befestigt, z. B. durch Nähte 56 und werden innerhalb der Nuten 57 zwischen den Segmenten 64 zu Ringen geschlossen (Figur 9, unten). Die elastische Bespannung ist hierbei auf einen Oberteil 58 über der segmentierten Oberfläche 59 der Unterlage 60 beschränkt. Die Bespannung 58 und die Wanne 54 sind zwar über einen Doppelreißverschluss 61 miteinander verbunden, können aber vollständig voneinander getrennt werden. Die Trageriemen bzw. -gurte 55 dienen gegebenenfalls gleichzeitig zum reversiblen Befestigen von Schaumstoff-Auflagen 43 (in Figur 6) auf Bodenplatten 42 und von Schaumstoff-Einlagen 47 (in Figur 8) in einer Zarge 45 auf einem Boden 44. In der Wanne 54 können Durchgangsöffnungen 62 für die Trageriemen bzw. -gurte 55 zum Durchstecken vorgesehen sein, um letztere durch Quernuten 63 zu führen, die am Boden einiger Nuten 57 zwischen den Schaumstoffsegmenten 64 vorgesehen sind, wie in Figur 10 veranschaulicht ist. Im fertigen Zusammenbau, der im untersten Teil der Figur 9 gezeigt ist, die darüber die Einzelteile zeigt, sind von den Trageriemen bzw. -gurten 55 integral gebildete Trageschlaufe 65 zu sehen.

In Figur 11 ist ein vertikaler Teilquerschnitt durch eine mögliche Ausführungsform der Erfindung gezeigt, in welcher die nebeneinander liegenden Schaumstoffsegmente 66 je mit einer Sprungfederstruktur 67 kombiniert sind, die vorliegend je aus einer einzigen spiralförmigen Sprungfeder besteht, jedoch auch jeweils aus mehreren Sprungfedern gebildet sein kann.

Die Schaumstoffsegmente 66 sind auf die Sprungfederstrukturen 67 abnehmbar aufgesetzt, indem sie auf den Teller 68a einer, vorzugsweise aus Kunststoff bestehenden, Halterung 68 aufgebracht sind, deren zylindrischer Schaft 68b in das obere Ende der Sprungfederstruktur 67 hineingesteckt ist. Auf diese Weise ist eine Steckkopplung zwischen den Schaumstoffsegmenten 66 und den Sprungfederstrukturen 67 vorgesehen, die es gestattet, die Schaumstoffsegmente 66 zur Reinigung oder Auswechslung abzunehmen.

Die unteren Teile der einzelnen Sprungfederstrukturen 67 sind vorliegend von einer leicht deformierbaren Umhüllung 69, bevorzugt aus Textilmaterial, umschlossen. Die einzelnen Sprungfederstrukturen 67 können im mittleren und unteren Bereich, vorliegend über die Umhüllung 69, fest miteinander verbunden sein, während sie das im oberen Bereich nicht sind, so dass sie dort frei schwingen können und damit zumindest im oberen Bereich im Wesentlichen unabhängig voneinander elastisch komprimierbar sind.

Weiterhin sind die Kombinationen aus Schaumstoffsegment 66 und Sprungfederstruktur 67 im oberen Bereich tailliert, wozu sich vorliegend das Schaumstoffsegment 66 nach unten zu bei 70a und die Sprungfederstruktur nach oben zu bei 70b verjüngt. Diese Taillierung hat die weiter oben beschriebenen Vorteile.

Als Abdeckung kann ein textiler Gesamtbezug, beispielsweise der in Figur 7 gezeigten Art, über die Schaumstoffsegmente 66 gespannt sein, wobei die Schaumstoffsegmente 66 vorzugsweise mit einer reibungsreduzierenden Beflockung versehen sind, oder es können Einzelhauben auf den Schaumstoffsegmenten angebracht sein.

**Patentansprüche**

1. Polster, insbesondere Matratze, umfassend einen elastischen Potsterkern (1, 2, 3; 41; 44-46), der ganz oder teilweise als Schaumstoffkern ausgebildet ist, wobei die dem Benutzer zugewandte Seite des Polsterkerns nebeneinander liegende Schaumstoffsegmente (4, 5, 6; 27, 28; 64; 66) aufweist, die im Wesentlichen unabhängig voneinander elastisch komprimierbar sind,

   **dadurch gekennzeichet, dass**

   alle Schaumstoffsegmente (4, 5, 6; 27, 28; 64; 66) oder zumindest diejenigen Schaumstoffsegmente, die den vom Benutzer am stärksten belasteten Bereichen des Polsterkerns (1, 2, 3; 41; 44-46) entsprechen, aus einem Schaumstoff hergestellt sind, bei dem der Quotient Q aus der Stauchhärte S und dem Raumgewicht R des Schaumstoffs einen Wert von weniger als 0,8 kp-cm/g besitzt derart, dass der Wert der Ermüdung E der Schaumstoffe von allen Schaumstoffsegmenten (4, 5, 6; 27, 28; 64; 66) oder zumindest von denjenigen Schaumstoffsegmenten, die durch den Benutzer am stärksten belastet werden, nach einem Dauertest geringer als 0,1 kp·cm ist, wobei

   (a) der Dauertest ausgeführt wird durch periodische Druckbelastung eines kubischen Prüfkörpers mittels eines Druckstempels mit 120.000 Kompressionszyklen und mit einer Kompressionsfrequenz von 1,5 Hz sowie mit einer jeweiligen 40%-igen Volumenkompression und
   (b) der Wert der Ermüdung sich darstellt als die Flächendifferenz zwischen einer vor und einer nach dem Dauertest statisch gemessenen Federkennlinie des Schaumstoff.

2. Polster nach Anspruch 1,
   **dadurch gekennzeichet, dass**
   der Schaumstoff Polyurethan und/oder Latex ist, und dass der Quotient Q aus der Stauchhärte S und dem Raumgewicht R des Schaumstoffs bei Polyurethan einen Wert von weniger als 0,6 kp·cm/g besitzt und bei Latex einen Wert von weniger als 0,7 kp·cm/g.

3. Polster nach einem der Ansprüche 1 oder 2,
   **dadurch gekennzeichet, dass**
   zwischen dem Quotienten Q aus der Stauchhärte S und dem Raumgewicht R des Schaumstoffs und der Ermüdung E des Schaumstoffs in etwa die Beziehung $Q = q + p \cdot E$ mit $Q = S/R$ gilt, wobei q und p schaumstoffabhängige Parameter sind, wobei Q ≤ q gilt.

**4.** Polster nach einem der Ansprüche 1 bis 3,
**dadurch gekennzeichet, dass**
die Stauchhärte S der Schaumstoffe ≥ 20 hPa, mehr bevorzugt ≥ 30 hPa und noch mehr bevorzugt ≥ 40 hPa ist und der Wert der Ermüdung E vorzugsweise ≤ 0,08 kp·cm, besonders bevorzugt ≤ 0,065 kp·cm und noch mehr bevorzugt ≤ 0,05 kp·cm, am meisten bevorzugt Null oder nahezu Null, d. h. ≤ 0,01 kp·cm, ist.

**5.** Polster nach einem der Ansprüche 1 bis 4,
**dadurch gekennzeichet, dass**
zumindest einige Schaumstoffsegmente, bevorzugt alle Schaumstoffsegmente (4, 5, 6; 27, 28; 64; 66), aus offenzelligem, vorzugsweise retikuliertem, Schaumstoff bestehen.

**6.** Polster nach einem der Ansprüche 1 bis 5,
**dadurch gekennzeichet, dass**
die Schaumstoffsegmente (46) zu zwei oder mehr Schaumstoffsegmentgruppen (48, 49, 50) zusammengefasst sind, die sich durch das Raumgewicht R und/oder die Stauchhärte S des Schaumstoffs voneinander unterscheiden.

**7.** Polster nach einem der Ansprüche 1 bis 6,
**dadurch gekennzeichet, dass**
die Schaumstoffsegmente (4) auf und/oder in einer Halterung (42; 44, 45) (a) als separate Segmente oder (b) als separate Gruppen von jeweils mehreren zusammenhängenden Segmenten oder (c) als eine Kombination von separaten Segmenten und einer oder mehreren Gruppen von zusammenhängenden Segmenten oder (d) als insgesamt zusammenhängende Segmente, reversibel aufgebracht und/oder eingefügt sind, wobei die Halterung (42; 44, 45) eine Bodenplatte (42, 44) oder Bodenkonstruktion mit oder ohne Zarge (45) ist.

**8.** Polster nach einem der Ansprüche 1 bis 7,
**dadurch gekennzeichet, dass**
die Grundstruktur der Schaumstoffsegmente (4, 5, 6; 27, 28; 64; 66) quaderförmig, insbesondere würfelförmig, oder pyramidenstumpfförmig oder prismatisch oder zylindrisch ist.

**9.** Polster nach einem der Ansprüche 1 bis 8,
**dadurch gekennzeichet, dass**
die Schaumstoffsegmente (4, 5, 6; 27, 28; 64) oder Schaumstoff enthaltende Polsterkernsegmente (66, 67) seitlich, vorzugsweise um ihren ganzen Umfang herum, tailliert sind, wobei die Taillierung (7, 8, 9; 70a, 70b) in der oberen Hälfte, vorzugsweise im oberen Drittel, der Höhe der Schaumstoffsegmente (4, 5, 6; 27, 28; 64) oder der Schaumstoff enthaltenden Polsterkernsegmente (66, 67) vorgesehen ist.

**10.** Polster nach einem der Ansprüche 1 bis 9,
**dadurch gekennzeichet, dass**
die Unterseiten der Schaumstoffsegmente, vorzugsweise der taillierten Schaumstoffsegmente (27, 28), von unten her mit Ausschnitten, insbesondere Nuten (31, 32), und gegebenenfalls mit Einschnitten (37, 38) versehen sind.

**11.** Polster nach einem der Ansprüche 1 bis 10,
**dadurch gekennzeichet, dass**
die Oberseiten (14, 15) der Schaumstoffsegmente, insbesondere der taillierten Schaumstoffsegmente (5, 6), durch zusätzliche Nuten (19, 20) in feinere Untersegmente von vorzugsweise geringerer Höhe unterteilt sind, wobei diese feineren Untersegmente gegebenenfalls auch seitlich tailliert sind.

**12.** Polster nach einem der Ansprüche 1 bis 11,
**dadurch gekennzeichet, dass**
die Oberflächen des Schaumstoffs zumindest teilweise mit einer Beflockung versehen sind, wobei die gesamte Oberseite des Schaumstoffs, insbesondere der Schaumstoffsegmente (4, 5, 6; 27, 28; 64; 66), des Polsterkerns (1, 2, 3; 41; 44-46) beflockt ist, wobei der verwendete Flock dem Bereich von 0,5 bis 22 dtex entnommen ist und/oder der verwendete Flock antistatisch ausgerüstet ist.

**13.** Polster nach einem der Ansprüche 1 bis 12,
**dadurch gekennzeichet, dass**

das Polster eine Abdeckung (51) umfasst, welche zumindest über den dem Benutzer zugewandten Flächen der Schaumstoffsegmente (4), ein reversibel elastischer, insbesondere bi-elastischer, Bezug (51) ist oder einen solchen Bezug (51) umfasst, wobei vorzugsweise die reversible Dehnbarkeit, insbesondere Bi-Dehnbarkeit, des Bezugs, insbesondere insoweit, als dieser zur großflächigen Abdeckung der dem Benutzer zugewandten segmentierten Schaumstofffläche des Polsterkerns (44-46) dient, Werte besitzt, welche ≥ 20 %, bevorzugt ≥ 100 %, am meisten bevorzugt ≥ 200 % betragen, wobei der Bezug (51) zumindest in seinem, den Oberseiten der Schaumstoffsegmente (4) zugewandten Bereich doppellagig ausgeführt ist, wobei die untere, mit dem, gegebenenfalls beflockten, Schaumstoff in Kontakt befindliche Lage (52) aus einem atmungsaktiven, elastischen, bevorzugt bi-elastischen, und auf dem, gegebenenfalls beflockten, Schaumstoff gleitfähigem Material besteht, und wobei die obere, dem Benutzer zugewandte Lage (53) auf der unteren Lage (52) gleitfähig sowie ebenfalls elastisch, bevorzugt bi-elastisch, und atmungsaktiv ist, wobei die obere Lage (53) auf ihrer Unterseite aus besonders gleitfähigem Material gefertigt oder mit einer gleitfähigen Ausrüstung versehen list und der Bezug (51) oder die untere Lage (52) des doppellagigen Bezugs (51) die gesamte segmentierte Schaumstofffläche des Polsterkerns (44-46) kontinuierlich bedeckt oder der Bezug jedes einzelne Schaumstoffsegment (4, 5, 6; 27, 28; 66) gesondert, vorzugsweise in der Form von jeweils einer abnehmbaren Kappe, bedeckt.

**14.** Polster nach einem der Ansprüche 1 bis 13,
**dadurch gekennzeichet, dass**
das Polster eine Abdeckung (51) umfasst, wobei die Abdeckung des Polsterkerns, soweit sie sich nicht über der Oberseite (59) der Schaumstoffsegmente (64) erstreckt, in der Form einer, vorzugsweise textilen, Wanne (54) oder Schale gestaltet ist, in die der Polsterkern (60, 64) einfügbar ist und die aus einem Material besteht, das gegenüber dem Material der auf den Schaumstoffsegmenten (64) vorgesehenen Abdeckung (58) wesentlich reißfester und weniger elastisch ist, wobei die Wanne (54) oder Schale vorzugsweise aus schwer entflammbarem Material besteht, an der Wanne (54) oder Schale Tragegriffe (65) vorgesehen sind, und/oder am Boden der Wanne (54) oder Schale Stränge (55), vorzugsweise Riemen, Gurte oder Seile, befestigt sind, deren Enden zu Tragegriffen (65) geschlossen sind oder an denen Tragegriffe angebracht sind oder in welche Tragegriffe in sonstiger Weise integriert sind, wobei die Stränge (55) durch die Seitenwände der Wanne (54) oder Schale hindurchgeführt, am Boden von Nuten (47, 63) zwischen Schaumstoffsegmenten (64) im Inneren der Wanne (54) oder Schale verlaufen und sich, bevorzugt im Inneren der Wanne (54) oder Schale, zu Ringen schließen lassen, die vorzugsweise **dadurch** lose eingelegte Bestandteile, insbesondere Schaumstoffsegmente (64), des Polsterkerns befestigen.

**15.** Polster nach einem der vorhergehenden Ansprüche,
**dadurch gekennzeichet, dass**
zumindest einige der Schaumstoffsegmente (66), bevorzugt alle Schaumstoffsegmente (66), je mit einer Sprungfederstruktur (67) kombiniert sind, die aus wenigstens einer Sprungfeder besteht, wobei das Schaumstoffsegment (66) auf die Sprungfederstruktur (67) aufgesetzt ist, die einzelnen Sprungfederstrukturen (67) zumindest im oberen Bereich nicht mit benachbarten Sprungfederstrukturen fest verbunden und folglich frei schwingbar und im Wesentlichen unabhängig voneinander elastisch komprimierbar sind, und/oder die Kombination aus Schaumstoffsegment (66) und Sprungfederstruktur (67) im oberen Bereich, vorzugsweise im oberen Drittel derselben, tailliert ist.

**16.** Polster nach einem der vorhergehenden Ansprüche,
**dadurch gekennzeichet, dass**
das Polster eine von dem elastischen Polsterkern (1, 2, 3; 41; 44-46) abnehmbare Abdeckung (51) umfasst.

**17.** Polster nach einem der vorhergehenden Ansprüche,
**dadurch gekennzeichet, dass**
das Polster eine Abdeckung (51) umfasst, wobei die Abdeckung (51) derart ausgebildet ist, dass sie den Schaumstoffsegmenten (4, 5, 6; 27, 28; 64; 66) ihre im Wesentlichen unabhängige elastische Komprimierbarkeit belässt, indem sie elastisch und/oder unterbrochen ausgeführt ist.

**Claims**

**1.** Cushion, in particular a mattress, comprising an elastic cushion core (1, 2, 3; 41; 44-46) which is embodied entirely or partially as a foam core, wherein the side of the cushion core facing towards the user comprises foam segments (4, 5, 6; 27, 28; 64; 66) which are located next to one another and which are elastically compressible essentially independently of one another, **characterised in that** all the foam segments (4, 5, 6; 27, 28; 64; 66) or at least those foam segments which correspond to the regions of the cushion core (1, 2, 3; 41; 44-46) that are most greatly loaded by the user are made from a foam in which the quotient Q of the compression hardness S and the weight per unit volume R of the foam has a value of less than 0.8 kp·cm/g such that the value of the fatigue E of the foams of all the foam segments (4, 5, 6; 27, 28; 64; 66) or at least of those foam segments that are most greatly loaded by the user is less than 0.1 kp·cm after an endurance test, wherein

> (a) the endurance test is carried out by periodic pressure loading of a cubic test specimen using a pressure ram with 120,000 compression cycles and with a compression frequency of 1.5 Hz and also with a respective 40% volume compression, and
> (b) the fatigue value is represented as the difference in area between a spring characteristic of the foam measured statically before and after the endurance test.

2. Cushion according to claim 1, **characterised in that** the foam is polyurethane and/or latex, and **in that** the quotient Q of the compression hardness S and the weight per unit volume R of the foam in the case of polyurethane has a value of less than 0.6 kp·cm/g and in the case of latex has a value of less than 0.7 kp·cm/g.

3. Cushion according to one of claims 1 or 2, **characterised in that**, between the quotient Q of the compression hardness S and the weight per unit volume R of the foam and the fatigue E of the foam, approximately the relationship Q=q+p·E applies, where Q=S/R, q and p being foam-dependent parameters, where Q ≤ q.

4. Cushion according to one of claims 1 to 3, **characterised in that** the compression hardness S of the foams is ≥ 20 hPa, more preferably ≥ 30 hPa and even more preferably ≥ 40 hPa, and the fatigue value E is preferably 0.08 kp·cm, particularly preferably ≤ 0.065 kp·cm and even more preferably ≤ 0.05 kp·cm, most preferably zero or almost zero, i.e. ≤ 0.01 kp·cm.

5. Cushion according to one of claims 1 to 4, **characterised in that** at least some foam segments, preferably all the foam segments (4, 5, 6; 27, 28; 64; 66), are made from open-cell, preferably reticulated, foam.

6. Cushion according to one of claims 1 to 5, **characterised in that** the foam segments (46) are combined to form two or more foam segment groups (48, 49, 50) which differ from one another by the weight per unit volume R and/or the compression hardness S of the foam.

7. Cushion according to one of claims 1 to 6, **characterised in that** the foam segments (4) are reversibly applied to and/or inserted in a holder (42; 44, 45) (a) as separate segments or (b) as separate groups of in each case a plurality of connected segments or (c) as a combination of separate segments and one or more groups of connected segments or (d) as segments which are all connected together, wherein the holder (42; 44, 45) is a base plate (42, 44) or base structure with or without a frame (45).

8. Cushion according to one of claims 1 to 7, **characterised in that** the base structure for the foam segments (4, 5, 6; 27, 28; 64; 66) is shaped as a block, in particular as a cube, or is shaped as a truncated pyramid or is prismatic or cylindrical.

9. Cushion according to one of claims 1 to 8, **characterised in that** the foam segments (4, 5, 6; 27, 28; 64) or foam-containing cushion core segments (66, 67) are waisted at the sides, preferably around their entire circumference, wherein the waisting (7, 8, 9; 70a, 70b) is provided in the upper half, preferably in the upper third, of the height of the foam segments (4, 5, 6; 27, 28; 64) or of the foam-containing cushion core segments (66, 67).

10. Cushion according to one of claims 1 to 9, **characterised in that** the undersides of the foam segments, preferably of the waisted foam segments (27, 28), are provided from below with cutouts, in particular grooves (31, 32), and optionally with incisions (37, 38).

11. Cushion according to one of claims 1 to 10, **characterised in that** the upper sides (14, 15) of the foam segments, in particular of the waisted foam segments (5, 6), are divided by additional grooves (19, 20) into finer sub-segments of preferably smaller height, wherein these finer sub-segments are optionally also waisted at the sides.

12. Cushion according to one of claims 1 to 11, **characterised in that** the surfaces of the foam are at least partially provided with a flocking, wherein the entire upper side of the foam, in particular of the foam segments (4, 5, 6; 27, 28; 64; 66), of the cushion core (1, 2, 3; 41; 44-46) is flocked, wherein the flock used is taken from the range 0.5 to 22 dtex and/or the flock used is made antistatic.

**13.** Cushion according to one of claims 1 to 12, **characterised in that** the cushion comprises a cover (51) which at least over the surfaces of the foam segments (4) facing towards the user is a reversibly elastic, in particular bi-elastic, covering (51) or comprises such a covering (51), wherein preferably the reversible stretchability, in particular bi-stretchability, of the covering, in particular in so far as this serves for covering a large surface area of the segmented foam surface of the cushion core (44-46) facing towards the user, has values which are ≥ 20%, preferably ≥ 100%, most preferably ≥ 200%, wherein the covering (51), at least in its region facing towards the upper sides of the foam segments (4), is embodied in two layers, wherein the lower layer (52) which is in contact with the optionally flocked foam is made from a breathable, elastic, preferably bi-elastic material which is slidable on the optionally flocked foam, and wherein the upper layer (53) facing towards the user is slidable on the lower layer (52) and is likewise elastic, preferably bi-elastic, and breathable, wherein the underside of the upper layer (53) is made from particularly slidable material or is provided with a slidable coating, and the covering (51) or the lower layer (52) of the double-layered covering (51) continuously covers the entire segmented foam surface of the cushion core (44-46), or the covering covers each individual foam segment (4, 5, 6; 27, 28; 66) separately, preferably in the form of a removable cap in each case.

**14.** Cushion according to one of claims 1 to 13, **characterised in that** the cushion comprises a cover (51), wherein the cover of the cushion core, in so far as it does not extend over the upper side (59) of the foam segments (64), is embodied in the form of a, preferably textile, trough (54) or shell into which the cushion core (60, 64) can be inserted and which is made from a material that is much more tear-resistant and less elastic than the material of the cover (58) which is provided on the foam segments (64), wherein the trough (54) or shell is preferably made from flame-retardant material, carrying handles (65) are provided on the trough (54) or shell, and/or cords (55), preferably straps, belts or ropes, are attached to the bottom of the trough (54) or shell, the ends of which cords are closed to form carrying handles (65) or to which carrying handles are attached or in which carrying handles are integrated in some other way, wherein the cords (55) are passed through the side walls of the trough (54) or shell, run along the bottom of grooves (47, 63) between foam segments (64) in the interior of the trough (54) or shell and, preferably in the interior of the trough (54) or shell, can be closed to form loops which preferably thereby fix loosely placed components, in particular foam segments (64), of the cushion core.

**15.** Cushion according to one of the preceding claims, **characterised in that** at least some of the foam segments (66), preferably all the foam segments (66), are each combined with a coil spring structure (67) which consists of at least one coil spring, wherein the foam segment (66) is placed onto the coil spring structure (67), the individual coil spring structures (67) at least in the upper region are not fixedly connected to adjacent coil spring structures and therefore can vibrate freely and are elastically compressible essentially independently of one another, and/or the combination of foam segment (66) and coil spring structure (67) is waisted in the upper region, preferably in the upper third thereof.

**16.** Cushion according to one of the preceding claims, **characterised in that** the cushion comprises a cover (51) which can be removed from the elastic cushion core (1, 2, 3; 41; 44-46).

**17.** Cushion according to one of the preceding claims, **characterised in that** the cushion comprises a cover (51), wherein the cover (51) is embodied in such a way that it allows the foam segments (4, 5, 6; 27, 28; 64; 66) their essentially independent elastic compressibility since said cover has an elastic and/or interrupted configuration.

**Revendications**

**1.** Rembourrage, en particulier matelas, comprenant un coeur rembourré élastique (1, 2, 3 ; 41 ; 44-46), qui est configuré en totalité ou en partie comme coeur en mousse, sachant que le côté du coeur rembourré tourné vers l'utilisateur comporte des segments de mousse (4, 5, 6 ; 27, 28 ; 64 ; 66) disposés l'un à côté de l'autre, qui sont élastiquement comprimables, sensiblement indépendamment les uns des autres,
**caractérisé en ce que**
tous les segments de mousse (4, 5, 6 ; 27, 28 ; 64 ; 66) ou au moins ceux des segments de mousse qui correspondent aux zones du coeur rembourré (1, 2, 3 ; 41 ; 44-46) les plus fortement sollicitées par l'utilisateur, sont fabriqués en une mousse pour laquelle le quotient (Q) de la dureté de compression (S) et du poids spécifique (R) de la mousse possède une valeur de moins de 0,8 kg$_f$·cm/g, de telle sorte que la valeur de la fatigue E des mousses de tous les segments de mousse (4, 5, 6 ; 27, 28 ; 64 ; 66) ou au moins de ceux des segments de mousse qui sont le plus fortement sollicités par l'utilisateur, est de moins de 0,1 kg$_f$·cm après un test de longue durée, sachant que

(a) le test de longue durée est exécuté par des charges de pression périodiques d'un corps d'essai cubique au moyen d'un poinçon, par 120.000 cycles de compression et à une fréquence de compression de 1,5 Hz, de même qu'avec une compression volumique respective de 40 %, et

(b) la valeur de la fatigue se présente comme la différence de surface entre une courbe caractéristique d'élasticité de la mousse mesurée statiquement avant le test de longue durée et une courbe caractéristique mesurée après ledit test.

2. Rembourrage selon la revendication 1,
**caractérisé en ce que** la mousse est en polyuréthane et/ou en latex, et **en ce que** le quotient Q de la dureté de compression S et du poids spécifique R de la mousse possède pour le polyuréthane une valeur de moins de 0,6 $kg_f \cdot cm/g$ et pour le latex une valeur de moins de 0,7 $kg_f \cdot cm/g$.

3. Rembourrage selon l'une quelconque des revendications 1 ou 2,
**caractérisé en ce que**
entre le quotient Q de la dureté de compression S et du poids spécifique R de la mousse et la fatigue E de la mousse, on a à peu près la relation $Q = q + p \cdot E$, avec $Q = S/R$, q et p étant des paramètres qui dépendent de la mousse, sachant que l'on a $Q \leq q$.

4. Rembourrage selon l'une quelconque des revendications 1 à 3,
**caractérisé en ce que**
la dureté de compression S des mousses est > 20 hPa, plus préférablement $\geq$ 30 hPa et de façon particulièrement préférée $\geq$ 40 hPa, et la valeur de la fatigue E est de préférence $\leq$ 0,08 $kg_f \cdot cm$, de façon particulièrement préférée $\leq$ 0,065 $kg_f \cdot cm$, encore plus préférablement $\leq$ 0,05 $kg_f \cdot cm$, le plus préférablement zéro ou à peu près zéro, c'est-à-dire $\leq$ 0,01 $kg_f \cdot cm$.

5. Rembourrage selon l'une quelconque des revendications 1 à 4,
**caractérisé en ce que**
au moins quelques segments de mousse, de préférence tous les segments de mousse (4, 5, 6 ; 27, 28 ; 64 ; 66) consistent en mousse à pores ouverts, de préférence réticulée.

6. Rembourrage selon l'une quelconque des revendications 1 à 5,
**caractérisé en ce que**
les segments de mousse (46) sont rassemblés en deux groupes de segments de mousse (48, 49, 50) ou plus, qui se distinguent les uns des autres par le poids spécifique R et/ou par la dureté de compression S de la mousse.

7. Rembourrage selon l'une quelconque des revendications 1 à 6,
**caractérisé en ce que**
les segments de mousse (4) sont, de façon réversible, appliqués sur et/ou insérés dans une fixation (42 ; 44, 45), (a) comme segments séparés ou (b) comme groupes séparés de plusieurs segments allant ensemble respectivement, ou (c) comme une combinaison de segments séparés et d'un ou de plusieurs groupes de segments allant ensemble, ou (d) comme segments allant globalement ensemble, la fixation (42 ; 44, 45) étant une plaque de fond (42, 44) ou une construction de fond avec ou sans châssis (45).

8. Rembourrage selon l'une quelconque des revendications 1 à 7,
**caractérisé en ce que**
la structure de base des segments de mousse (4, 5, 6 ; 27, 28 ; 64 ; 66) est de forme parallélépipédique, en particulier cubique, ou en forme de tronc de pyramide, ou prismatique ou cylindrique.

9. Rembourrage selon l'une quelconque des revendications 1 à 8,
**caractérisé en ce que**
les segments de mousse (4, 5, 6 ; 27, 28 ; 64) ou les segments de coeur rembourré (66, 67) contenant de la mousse, sont cintrés latéralement, de préférence autour de toute leur circonférence, le cintrage (7, 8, 9 ; 70a, 70b) étant prévu dans la moitié supérieure, de préférence dans le tiers supérieur, de la hauteur des segments de mousse (4, 5, 6 ; 27, 28 ; 64) ou des segments de coeur rembourré (66, 67) contenant de la mousse.

10. Rembourrage selon l'une quelconque des revendications 1 à 9,
**caractérisé en ce que**
les faces inférieures des segments de mousse, de préférence des segments de mousse cintrés (27, 28), sont dotées depuis le bas de découpes, en particulier de rainures (31, 32) et le cas échéant d'entailles (37, 38).

**11.** Rembourrage selon l'une quelconque des revendications 1 à 10,
**caractérisé en ce que**
les faces supérieures (14, 15) des segments de mousse, en particulier des segments de mousse cintrés (5, 6), sont subdivisées en sous-segments plus fins, de hauteur de préférence faible, par des rainures (19, 20) supplémentaires, ces sous-segments plus fins étant le cas échéant cintrés latéralement eux aussi.

**12.** Rembourrage selon l'une quelconque des revendications 1 à 11,
**caractérisé en ce que**
les surfaces de la mousse sont dotées au moins en partie d'un flocage, sachant que l'ensemble de la face supérieure de la mousse, en particulier des segments de mousse (4, 5, 6 ; 27, 28 ; 64 ; 66), du coeur rembourré (1, 2, 3 ; 41 ; 44-46), est floqué, le flocage utilisé étant pris dans l'intervalle de 0,5 à 22 dtex et/ou le flocage utilisé étant apprêté antistatique.

**13.** Rembourrage selon l'une quelconque des revendications 1 à 12,
**caractérisé en ce que**
le rembourrage comprend un recouvrement (51), lequel, au moins sur les surfaces des segments de mousse (4) tournées vers l'utilisateur, est une housse (51) réversiblement élastique, en particulier bi-élastique, ou comprend une telle housse (51), sachant que, de préférence, l'extensibilité réversible, en particulier la bi-extensibilité, de la housse, en particulier dans la mesure où celle-ci sert à un recouvrement en grande surface de la surface de mousse segmentée, tournée vers l'utilisateur, du coeur rembourré (44-46), possède des valeurs qui sont ≥ 20 %, de préférence ≥ 100 %, le plus préférablement ≥ 200 %, sachant que la housse (51), au moins dans sa partie tournée vers les faces supérieures des segments de mousse (4), est réalisée à double couche, sachant que la couche inférieure (52) se trouvant en contact avec la mousse, le cas échéant floquée, consiste en un matériau qui respire, élastique, de préférence bi-élastique, et susceptible de glisser sur la mousse, le cas échéant floquée, et sachant que la couche supérieure (53), tournée vers l'utilisateur, est susceptible de glisser sur la couche inférieure (52), de même qu'elle est également élastique, de préférence bi-élastique et respire, sachant que la couche supérieure (53) est réalisée à sa face inférieure en un matériau particulièrement apte à glisser ou qu'elle est dotée d'un apprêt apte à glisser, et que la housse (51), ou la couche inférieure (52) de la housse (51) en deux couches, recouvre en continu l'ensemble de la surface de mousse segmentée du coeur rembourré (44-46), ou que la housse recouvre chaque segment de mousse (4, 5, 6 ; 27, 28 ; 66) individuel séparément, de préférence sous la forme d'un capuchon amovible sur chacun.

**14.** Rembourrage selon l'une quelconque des revendications 1 à 13,
**caractérisé en ce que**
le rembourrage comprend un recouvrement (51), sachant que le recouvrement du coeur rembourré, dans la mesure où il ne s'étend pas sur la face supérieure (59) des segments de mousse (64), est configuré sous la forme d'une cuvette (54) ou d'une coupe, de préférence textile, dans laquelle le coeur rembourré (60, 64) peut être inséré, et qui consiste en un matériau qui, en comparaison du matériau du recouvrement (58) prévu sur les segments de mousse (64), est nettement plus résistant au déchirement et moins élastique, sachant que la cuvette (54) ou la coupe consiste de préférence en un matériau difficilement inflammable, que sur la cuvette (54) ou la coupe sont prévues des poignées (65), et/ou que sur le fond de la cuvette (54) ou de la coupe sont fixées des cordelettes (55), de préférence des courroies, des lanières ou des cordes, dont les extrémités sont fermées pour donner des poignées (65) ou sur lesquelles sont fixées des poignées, ou dans lesquelles des poignées sont intégrées de quelque autre façon, sachant que les cordelettes (55), guidées à travers les parois latérales de la cuvette (54) ou de la coupe, s'étendent sur le fond de rainures (47, 63) entre les segments de mousse (64) à l'intérieur de la cuvette (54) ou de la coupe et, de préférence à l'intérieur de la cuvette (54) ou de la coupe, peuvent être fermées en des anneaux qui, de préférence, fixent de la sorte des composants du coeur rembourré insérés sans fixation, en particulier des segments de mousse (64).

**15.** Rembourrage selon l'une quelconque des revendications précédentes,
**caractérisé en ce que**
au moins quelques-uns des segments de mousse (66), de préférence tous les segments de mousse (66) sont combinés chacun à une structure à ressorts (67) qui consiste en au moins un ressort, sachant que le segment de mousse (66) est appliqué sur la structure à ressorts (67), que les différentes structures à ressorts (67), au moins dans leur partie supérieure, ne sont pas solidaires des structures à ressorts voisines et sont par suite libres de se débattre et sont comprimables élastiquement de façon sensiblement indépendante les unes des autres, et/ou que la combinaison du segment de mousse (66) et de la structure à ressorts (67) est cintrée dans sa partie supérieure, de préférence dans le tiers supérieur de celle-ci.

**16.** Rembourrage selon l'une quelconque des revendications précédentes,
**caractérisé en ce que**
le rembourrage comprend un recouvrement (51) pouvant être retiré du coeur rembourré élastique (1, 2, 3 ; 41 ; 44-46).

**17.** Rembourrage selon l'une quelconque des revendications précédentes,
**caractérisé en ce que**
le rembourrage comprend un recouvrement (51), le recouvrement (51) étant configuré de telle sorte qu'il laisse aux segments de mousse (4, 5, 6 ; 27, 28 ; 64 ; 66) leur comprimabilité élastique sensiblement indépendante, **en ce qu'**il est réalisé sous une forme élastique et/ou interrompue.

FIG. 1

FIG. 2

FIG. 3

FIG. 4

FIG. 5

FIG. 6

EP 1 633 221 B1

FIG. 7

EP 1 633 221 B1

FIG. 8

EP 1 633 221 B1

FIG. 9

FIG. 10

FIG. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4124044 C2
- DE 10019449 A1
- DE 4124044 A1
- DE 10011472 A1
- DE 19961753 A1